# EUROPEAN PATENT APPLICATION

(11) **EP 4 742 356 A1**
(43) Date of publication of application: **13.05.2026**
(21) Application number: 24839446.2
(22) Date of filing: 19.06.2024
(51) Int. Cl.: H01M 10/0585, H01M 4/70, H01M 10/052, H01M 10/0562, H01M 10/0565

(54) **METHOD FOR MANUFACTURING ALL-SOLID-STATE BATTERY, APPARATUS FOR MANUFACTURING ALL-SOLID-STATE BATTERY, AND ALL-SOLID-STATE BATTERY**

(30) Priority: 07.07.2023 JP 2023112523; 07.07.2023 JP 2023112524
(71) Applicant: Kanadevia Corporation, Osaka-shi, Osaka 559-8559 (JP)
(72) Inventor: KAWASE, Hirokazu, Osaka-shi, Osaka 559-8559 (JP)
(74) Representative: Grünecker Patent- und Rechtsanwälte PartG mbB
(86) International application number: PCT/JP2024/022193
(87) International publication number: WO 2025/013550

(57) **Abstract**

A method of producing an all-solid-state battery 1 includes a cell forming step of forming a cell 2 including a positive electrode layer 21 made of a powder containing a positive electrode active material, a negative electrode layer 22 made of a powder containing a negative electrode active material, and a solid electrolyte layer 23 disposed between the positive electrode layer 21 and the negative electrode layer 22 and made of a powder of a solid electrolyte on a first substrate F1 in a dry process, a press step of laminating a second substrate F2 on the cell 2 and then pressing an laminate L obtained, a peeling step of peeling at least one of the first substrate F1 and the second substrate F2 from the cell 2, and a laminating step of alternately laminating the cell 2 and the current collector 3 so that one current collector 3 is disposed between two cells 2.

## Description

### TECHNICAL FIELD

The present invention relates to a method of producing an all-solid-state battery, a production apparatus for producing an all-solid-state battery, and an all-solid-state battery.

### BACKGROUND ART

Conventionally, there has been known an all-solid-state battery including an electrode layer body including a positive electrode layer, a negative electrode layer, and a solid electrolyte layer disposed between the positive electrode layer and the negative electrode layer, a positive current collector in contact with the positive electrode layer of the electrode layer body, and a negative current collector in contact with the negative electrode layer of the electrode layer body (see Patent Document 1 below).

### Citation List

### Patent Document

Patent Document 1: Japanese Unexamined Patent Publication No. 2018-125268

### SUMMARY OF THE INVENTION

### PROBLEM TO BE SOLVED BY THE INVENTION

Of the all-solid-state battery as described in Patent Document 1, further improvement in the energy density is required.

The present invention provides a method of producing an all-solid-state battery and an all-solid-state battery, in both of which the energy density can be improved.

### MEANS FOR SOLVING THE PROBLEM

The present invention [1] includes a method of producing an all-solid-state battery, the method comprising: a cell forming step of forming a cell on a first substrate in a dry process, the cell including a positive electrode layer made of a powder containing a positive electrode active material, a negative electrode layer made of a powder containing a negative electrode active material, and a solid electrolyte layer disposed between the positive electrode layer and the negative electrode layer and made of a powder of a solid electrolyte; a press step of laminating a second substrate on the cell and then pressing a laminate produced by the lamination; a peeling step of peeling at least one of the first substrate and the second substrate from the cell; and a laminating step of alternately laminating the cell and a current collector so that the current collector is disposed between two of the cells.

According to such a method, the cell formed on the first substrate in a dry process is pressed and solidified between the first substrate and the second substrate, and thereafter at least one of the first substrate and the second substrate is peeled, and the cell and the current collector are alternately laminated so that one current collector is disposed between two cells.

In this manner, it is possible to produce an all-solid-state battery that is a bi-cell type and includes a cell produced by a dry process.

Therefore, as compared with an all-solid-state battery including a cell produced by a wet process, the all-solid-state battery produced as described above allows for the suppression of a decrease in power generation efficiency caused by a void generated in a cell when the solvent volatilizes and a resin such as a binder. Furthermore, the all-solid-state battery produced as described above is bi-cell type, and thus allows for the reduction in volume and weight.

As a result, the method of producing the all-solid-state battery of the present invention allows for the improvement in the energy density of the all-solid-state battery produced by the method.

The present invention [2] includes the method described in the above-described [1], wherein the laminating step includes: a first step of laminating the current collector on a first cell; and a second step of laminating a second cell on the current collector, following the first step, wherein, in the second step, when the negative electrode layer of the first cell is in contact with the current collector, the second cell is laminated on the current collector so that the negative electrode layer of the second cell is in contact with the current collector, and when the positive electrode layer of the first cell is in contact with the current collector, the second cell is laminated on the current collector so that the positive electrode layer of the second cell is in contact with the current collector.

According to such a method, it is possible to produce a bi-cell type all-solid-state battery where the first cell and the second cell are in contact with one current collector.

The present invention [3] includes the method described in the above-described [1] or [2], wherein the current collector includes: a conductor; and an insulating member laminated on a peripheral edge portion of the conductor, wherein in the laminating step, the cell is laminated on the conductor, and the insulating member is disposed around the cell.

According to such a method, the current collector in which the insulating member is laminated on the peripheral edge portion of the conductor is used, and thus it is possible to produce an all-solid-state battery in a simple step of alternately laminating the cell and the current collector.

The present invention [4] includes the method described in the above-described [3], wherein the insulating member is laminated on a one-side surface of the conductor, and wherein the current collector further includes an adhesive layer laminated on an other-side surface of the conductor in the peripheral edge portion of the conductor.

According to such a method, when a cell is laminated on one current collector, and another current collector is laminated on the cell, the adhesive layer of the other current collector can be adhered to the insulating member of the one current collector.

Thus, it is possible to suppress the short circuit between the one current collector and the other current collector.

The present invention [5] includes the method described in the above-described [3] or [4], wherein the current collector includes a notch cut from an edge of the conductor to an inside of the insulating member, and wherein in the laminating step, a jig is disposed in the notch to determine a position of the cell with respect to the current collector so that an edge of the cell is in contact with the jig.

According to such a method, it is possible to easily laminate the cell and the current collector while suppressing that the misalignment of the cell with respect to the current collector.

The present invention [6] includes a production apparatus for producing an all-solid-state battery, the production apparatus which can be used in the method described in the above-described [5], the production apparatus comprising: a support table capable of supporting the current collector; a first movement member disposed at one side of the support table in a first direction, including a first jig, and capable of moving in the first direction between a first separated position away from the support table and a first proximate position closer to the support table than the first separated position; a second movement member disposed at the other side of the support table in the first direction, including a second jig, and capable of moving in the first direction between a second separated position away from the support table and a second proximate position closer to the support table than the second separated position; a third movement member disposed at one side of the support table in a second direction perpendicular to the first direction, including a third jig, and capable of moving in the second direction between a third separated position away from the support table and a third proximate position closer to the support table than the third separated position; and a fourth movement member disposed at the other side of the support table in the second direction, including a fourth jig, and capable of moving in the second direction between a fourth separated position away from the support table and a fourth proximate position closer to the support table than the fourth separated position, wherein the current collector includes a first notch, a second notch, a third notch, and a fourth notch, wherein in a state in which the current collector is placed on the support table, the first notch is disposed in one end portion of the current collector in the first direction, the second notch is disposed in the other end portion of the current collector in the first direction, the third notch is disposed in one end portion of the current collector in the second direction, and the fourth notch is disposed in the other end portion of the current collector in the second direction, wherein in a state in which the current collector is placed on the support table, and the first movement member is disposed at the first proximate position, the first jig is disposed in the first notch, wherein in a state in which the current collector is placed on the support table, and the second movement member is disposed at the second proximate position, the second jig is disposed in the second notch, wherein in a state in which the current collector is placed on the support table, and the third movement member is disposed at the third proximate position, the third jig is disposed in the third notch, and wherein in a state in which the current collector is placed on the support table, and the fourth movement member is disposed at the fourth proximate position, the fourth jig is disposed in the fourth notch.

According to such a configuration, in a state in which the cell is laminated on the current collector, the position of the cell can be determined with respect to the current collector in the first direction and the second direction by using a plurality of movement members (the first movement member, the second movement member, the third movement member, and the fourth movement member), each of which has a jig.

As a result, it is possible to laminate the cell and the current collector while suppressing that the misalignment of the cell with respect to the current collector.

The present invention [7] includes the production apparatus described in the above-described [6], wherein in a state in which the current collector is placed on the support table, the cell is placed on the current collector, and the first movement member is disposed at the first proximate position, the second movement member is moved from the second separated position toward the second proximate position to allow the second jig to move the cell toward the first jig so that an edge of the cell is contact with the first jig to determine a position of the cell with respect to the current collector in the first direction, and wherein in a state in which the current collector is placed on the support table, the cell is placed on the current collector, and the third movement member is disposed at the third proximate position, the fourth movement member is moved from the fourth separated position toward the fourth proximate position to allow the fourth jig to move the cell toward the third jig so that an edge of the cell is contact with the third jig to determine a position of the cell with respect to the current collector in the second direction.

According to such a configuration, it is possible to determine the position of the cell with respect to the current collector in the first direction by using the first movement member and the second movement member, and determine the position of the cell with respect to the current collector in the second direction by using the third movement member and the fourth movement member.

The present invention [8] includes the production apparatus described in the above-described [6] or [7], further comprising: a position determining member fixed to the support table to determine a position of the current collector with respect to the support table.

According to such a configuration, it is possible to laminate the cell and the current collector in a state in which the position of the current collector is determined with respect to the support table.

Therefore, it is possible to further suppress the misalignment of the cell with respect to the current collector.

The present invention [9] includes the production apparatus described in the above-described [8], wherein the position determining member includes: a first position determining portion disposed in one end portion of the support table in the first direction; and a second position determining portion disposed in one end portion of the support table in the second direction, wherein the production apparatus further comprises: a fifth movement member disposed at the other side of the support table in the first direction, and capable of moving in the first direction between a fifth separated position away from the support table and a fifth proximate position closer to the support table than the fifth separated position, the fifth movement member being moved from the fifth separated position toward the fifth proximate position to move the current collector placed on the support table toward the first position determining portion; and a sixth movement member disposed at the other side of the support table in the second direction, and capable of moving in the first direction between a sixth separated position away from the support table and a sixth proximate position closer to the support table than the sixth separated position, the sixth movement member being moved from the sixth separated position toward the sixth proximate position to move the current collector placed on the support table toward the second position determining portion.

According to such a configuration, it is possible to determine the position of the current collector with respect to the first position determining portion in the first direction by using the fifth movement member, and determine the position of the current collector with respect to the second position determining portion in the second direction by using the sixth movement member.

Thus, it is possible to determine the position of the current collector with respect to the support table in the first direction and the second direction.

The present invention [10] includes the production apparatus described in any one of the above-described [6] to [9], wherein each of the first jig, the second jig, the third jig, and the fourth jig is a rod extending in a lamination direction in which the cell and the current collector are laminated.

The present invention [11] includes an all-solid-state battery comprising: a plurality of cells each including a positive electrode layer, a negative electrode layer, and a solid electrolyte layer disposed between the positive electrode layer and the negative electrode layer; and a plurality of current collectors, wherein the cell and the current collector are alternately laminated so that the current collector is disposed between two of the cells, and wherein the current collector includes a conductor in contact with the cell, and an insulating member laminated on a peripheral edge portion of the conductor.

According to such a configuration, the cell and the current collector are alternately laminated so that one current collector is disposed between two cells. In other words, the all-solid-state battery has a bi-cell type laminate structure.

Therefore, it is possible to improve the energy density.

Further, the current collector includes a conductor and an insulating member laminated on the peripheral edge portion of the conductor.

Therefore, it is possible to produce an all-solid-state battery while suppressing the short circuit between the conductors in a simple step of alternately laminating the cell and the current collector.

The present invention [12] includes the all-solid-state battery described in the above-described [11], wherein the current collector includes a notch cut from an edge of the conductor inwardly through the insulating member.

According to such a configuration, it is possible to easily laminate the cell and the current collector while suppressing the misalignment of the cell with respect to the current collector by using a notch.

Further, a portion of the insulating member is notched, and thus the amount of the insulating member used is reduced. Therefore, it is possible to suppress the deterioration of the cell caused by the water in the insulating member.

The present invention [13] includes an all-solid-state battery comprising: a cell including a positive electrode layer, a negative electrode layer, and a solid electrolyte layer disposed between the positive electrode layer and the negative electrode layer; and a current collector including a notch in a peripheral edge portion.

According to such a configuration, it is possible to laminate the cell and the current collector while suppressing the misalignment of the cell with respect to the current collector by using a notch.

The present invention [14] includes the all-solid-state battery described in the above-described [13], wherein the current collector includes: a conductor in contact with the cell; and an insulating member laminated on a peripheral edge portion of the conductor, and disposed around the cell, and wherein the notch is cut from an edge of the conductor inwardly through the insulating member.

According to such a configuration, a portion of the insulating member is notched, and thus the amount of the insulating member used is reduced. Therefore, it is possible to suppress the deterioration of the cell caused by the water in the insulating member.

### EFFECTS OF THE INVENTION

According to the method of producing an all-solid-state battery of the present invention, it is possible to improve the energy density of the all-solid-state battery produced by the method.

Further, in the all-solid-state battery of the present invention, it is possible to improve the energy density.

### BRIEF DESCRIPTION OF THE DRAWINGS

FIG. 1A is a plan view of an all-solid-state battery as one embodiment of the present invention. FIG. 1B is a cross-sectional view of the all-solid-state battery shown in FIG. 1A, taken along line A-A.
FIG. 2A is a cross-sectional view of the layer structure of the cell shown in FIG. 1B. FIG. 2B is an enlarged view of the all-solid-state battery shown in FIG. 1B.
FIG. 3A is a plan view of the positive current collector shown in FIG. 2B. FIG. 3B is a cross-sectional view of the positive current collector shown in FIG. 3A, taken along line B-B.
FIG. 4 is a cross-sectional view of the all-solid-state battery shown in FIG. 1A, taken along line C-C.
FIG. 5A and FIG. 5B are process diagrams for describing a method of producing an all-solid-state battery. FIG. 5A shows a state in which the opening of the screen is filled with the positive electrode composite material in a cell forming step. FIG. 5B shows a state in which the positive electrode composite material in the opening is transferred onto the first substrate to form a positive electrode layer on the first substrate in the cell forming step.
FIG. 6A to FIG. 6C are process diagrams for describing the method of producing an all-solid-state battery, following FIG. 5B. FIG. 6A shows a state in which a solid electrolyte layer is formed on the positive electrode layer, and a negative electrode layer is formed on the solid electrolyte layer in the cell forming step. FIG. 6B shows a press step. FIG. 6C shows a peeling step.
FIG. 7A and FIG. 7B are process diagrams for describing the method of producing an all-solid-state battery, following FIG. 6C. FIG. 7A shows a state in which the first cell is laminated on the positive current collector in the laminating step. FIG. 7B shows a state in which the position of the first cell is determined with respect to the positive current collector in the first direction in the laminating step.
FIG. 8A and FIG. 8B are process diagrams for describing the method of producing an all-solid-state battery, following FIG. 7B. FIG. 8A shows a state in which the position of the first cell is determined with respect to the positive current collector in the second direction in the laminating step. FIG. 8B shows a state in which a negative current collector is laminated on the first cell, and a second cell is laminated on the negative current collector in a laminating step.
FIG. 9A and FIG. 9B are process diagrams for describing the method of producing an all-solid-state battery, following FIG. 8B. FIG. 9A shows a state in which the position of the second cell is determined with respect to the negative current collector in the first direction in the laminating step. FIG. 9B shows a state in which the position of the second cell is determined with respect to the negative current collector in the second direction in the laminating step.
FIG. 10 is a perspective view of a production apparatus that can be used in the laminating step shown in FIGS. 7A to 9B.
FIG. 11 is a plan view of the production apparatus shown in FIG. 10, showing a state in which each movement member is disposed in a separated position.
FIG. 12 shows a state in which each movement member shown in FIG. 11 is disposed in a proximate position.
FIG. 13 shows a state in which the positive current collector is disposed on the support table of the production apparatus shown in FIG. 11.
FIG. 14 shows a state in which the position of the positive current collector is determined with respect to the support table in the first direction, following FIG. 13.
FIG. 15 shows a state in which the position of the positive current collector is determined with respect to the support table in the second direction, following FIG. 14.
FIG. 16A and FIG. 16B are cross-sectional views for describing a laminate structure of an all-solid-state battery of a modified example.

### DESCRIPTION OF THE EMBODIMENTS

### 1. All-solid-state Battery

An all-solid-state battery 1 is described.

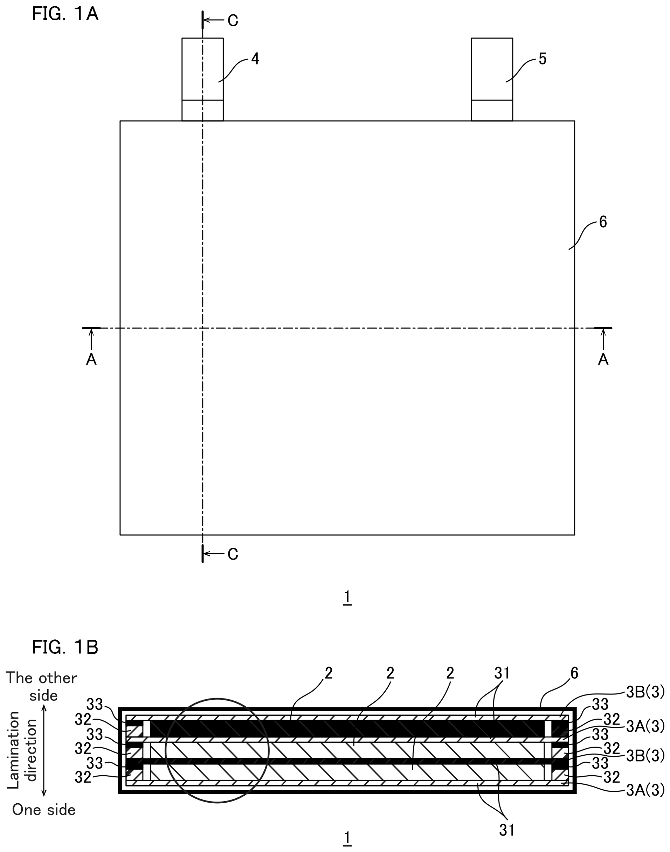

As shown in FIG. 1A and FIG. 1B, the all-solid-state battery 1 includes a plurality of cells 2, a plurality of current collectors 3, a positive electrode lead 4, a negative electrode lead 5, and an exterior material 6.

### (1) Cell

In the present embodiment, the cell 2 has a sheet shape. The cell 2 has a substantially rectangular shape when viewed from a thickness direction of the cell 2. The shape of the cell 2 is not limited. The cell 2 may have a board shape or may have a film shape. Alternatively, the cell 2 may have a substantially circular shape when viewed from the thickness direction of the cell 2.

The cell 2 has a thickness of, for example, 100 µm or more, preferably 200 µm or more, and, for example, 1000 µm or less, preferably 800 µm or less.

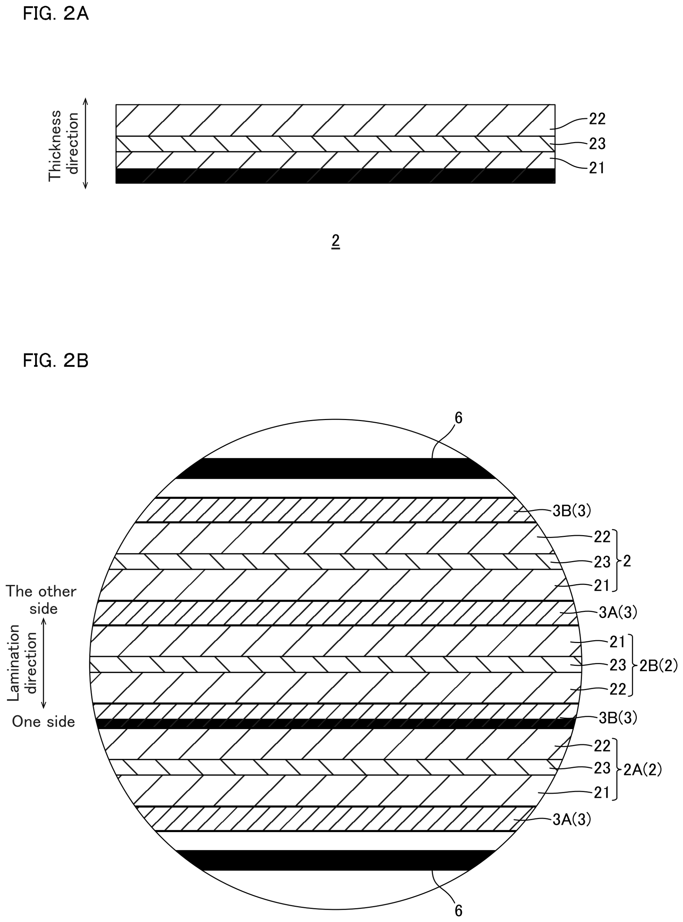

As shown in FIG. 2A, the cell 2 includes a positive electrode layer 21, a negative electrode layer 22, and a solid electrolyte layer 23. The cell 2 is a bare cell. The cell 2 consists of the positive electrode layer 21, the negative electrode layer 22, and the solid electrolyte layer 23. The cell 2 does not include a current collector.

### (1-1) Positive Electrode Layer

The positive electrode layer 21 is disposed away from the negative electrode layer 22 in the thickness direction of the cell 2. The positive electrode layer 21 is disposed on the opposite side to the negative electrode layer 22 with respect to the solid electrolyte layer 23 in the thickness direction of the cell 2. The positive electrode layer 21 is in contact with the solid electrolyte layer 23 and not in contact with the negative electrode layer 22.

The positive electrode layer 21 is made of a powder containing a positive electrode active material. In the present embodiment, the positive electrode layer 21 does not contain a resin such as a binder. In the present embodiment, the positive electrode layer 21 is made of a mixture of a powder of a positive electrode active material and a powder of a solid electrolyte. The positive electrode layer 21 may not contain a solid electrolyte. The positive electrode layer 21 may only consist of a positive electrode active material.

Examples of the positive electrode active material include a lithium-containing oxide. Examples of the lithium-containing oxide include lithium-nickel composite oxide (LiNi_{X}M_{1-X}O₂), lithium cobalt oxide (LiCoO₂), lithium nickel oxide (LiNiO₂), lithium-nickel-cobalt-aluminum composite oxide (LiNi_{0.8}Co_{0.15}Al_{0.05}O₂, NCA-based layered oxide), lithium manganese oxide (spinel-type lithium manganese oxide (LiMn₂O₄)), and composite oxide with an excess of Li (Li₂MnO₃-LiMO₂).

The positive electrode active material is not limited to a lithium-containing oxide as long as it is a material into/from which lithium ions can be inserted and desorbed. Examples of the positive electrode active material include an olivine-based compound (LiMPO₄) and a sulfur-containing compound (Li₂S).

In the above chemical formulas, M represents a transition metal.

As the positive electrode active material, a lithium-containing oxide containing at least one selected from the group consisting of Co, Ni, and Mn is preferably used from the viewpoint of easily obtaining a high capacity.

In addition, from the viewpoint of improving the rate characteristics, the surface of the positive electrode active material may be coated with a coating material.

Examples of the coating material include Li₄Ti₅O₁₂, LiTaO₃, Li₄NbO₃, LiAlO₂, Li₂ZrO₃, Li₂WO₄, Li₂TiO₃, Li₂B₄O₇, Li₃PO₄, Li₂MoO₄, LiBO₂, alumina (Al₂O₃), and carbon (C).

The positive electrode active materials may be used alone or in combination of two or more.

The solid electrolyte exhibits lithium ion conductivity. Examples of the solid electrolyte include an organic solid electrolyte and an inorganic solid electrolyte.

Examples of the inorganic solid electrolyte include sulfide, oxide, nitride, and hydride.

Examples of the sulfide include a sulfide containing Li₂S and another sulfide containing at least one element selected from the group consisting of elements in Groups 13, 14, and 15 of the periodic table.

Examples of elements in Groups 13, 14, and 15 of the periodic table include P, Si, Ge, As, Sb, and Al, and preferably P, Si, and Ge are used, and more favorably P is used.

Specifically, examples of the sulfide include Li₂S-SiS₂, Li₂S-P₂S₅, Li₂S-GeS₂, Li₂S-B₂S₃, Li₂S-Ga₂S₃, Li₂S-Al₂S₃, Li₂S-GeS₂-P₂S₅, Li₂S-Al₂S₃-P₂S₅, Li₂S-P₂S₃, Li₂S-P₂S₃-P₂S₅, LiX-Li₂S-P₂S₅, LiX-Li₂S-SiS₂, and LiX-Li₂S-B₂S₃ (X: I, Br or Cl).

As the solid electrolyte, preferably the inorganic solid electrolyte is used, and more preferably, the sulfide is used. The solid electrolytes may be used alone or in combination of two or more. The ratio of the positive electrode active material to the solid electrolyte is not limited.

The positive electrode layer 21 has a thickness of, for example, 50 µm or more, preferably 100 µm or more. The thickness of the positive electrode layer 21 is, for example, 500 µm or less, preferably 300 µm or less.

### (1-2) Negative Electrode Layer

The negative electrode layer 22 is disposed away from the positive electrode layer 21 in the thickness direction of the cell 2. The negative electrode layer 22 is disposed on the opposite side to the positive electrode layer 21 with respect to the solid electrolyte layer 23 in the thickness direction of the cell 2. The negative electrode layer 22 is in contact with the solid electrolyte layer 23 and not in contact with the positive electrode layer 21.

The negative electrode layer 22 is made of a powder containing a negative electrode active material. The negative electrode layer 22 does not contain a resin such as a binder. In the present embodiment, the negative electrode layer 22 is made of a mixture of a powder of the negative electrode active material and a powder of the solid electrolyte. The negative electrode layer 22 may not contain a solid electrolyte. The negative electrode layer 22 may only consist of the negative electrode active material.

The negative electrode active material is not limited as long as it is a material into/from which lithium ions can be inserted and desorbed. Examples of the negative electrode active material include a carbon material, a metal and an alloy thereof, a metalloid, and a compound of a metal or a metalloid.

Examples of the carbon material include graphite (natural graphite, artificial graphite), hard carbon, and amorphous carbon. Examples of the metal and the alloy thereof include lithium and an alloy thereof. Examples of the metalloid include silicon. Examples of the compound of a metal or a metalloid include oxide, sulfide, nitrogen, hydrate, and silicide (lithium silicide) of metals or metalloids. Examples of the oxide of a metal or a metalloid include titanium oxide and silicon oxide.

The negative electrode active materials may be used alone or in combination of two or more. As the negative electrode active material, for example, a silicon oxide and a carbon material can be used in combination.

Examples of the solid electrolyte contained in the negative electrode layer 22 include the above-described solid electrolytes. Preferably, the solid electrolyte contained in the negative electrode layer 22 is the same as the solid electrolyte contained in the positive electrode layer 21. The ratio of the negative electrode active material to the solid electrolyte is not limited.

The thickness of the negative electrode layer 22 is approximately the same as the thickness of the positive electrode layer 21. The thickness of the negative electrode layer 22 is, for example, 50 µm or more, and preferably 100 µm or more. The thickness of the negative electrode layer 22 is, for example, 500 µm or less, preferably 300 µm or less.

### (1-3) Solid Electrolyte Layer

The solid electrolyte layer 23 is disposed between the positive electrode layer 21 and the negative electrode layer 22 in the thickness direction of the cell 2. The solid electrolyte layer 23 is made of a powder of the solid electrolyte. The solid electrolyte layer 23 does not contain a resin such as a binder.

Examples of the solid electrolyte include the above-described solid electrolytes. Preferably, the solid electrolyte is the same as the solid electrolyte contained in the positive electrode layer 21.

The solid electrolyte layer 23 is thinner than the positive electrode layer 21 and the negative electrode layer 22. The solid electrolyte layer 23 has a thickness of, for example, 10 µm or more, and preferably 30 µm or more. The thickness of the solid electrolyte layer 23 is, for example, 300 µm or less, preferably 100 µm or less.

### (2) Current Collector

As shown in FIG. 2B, each of the plurality of current collectors 3 is laminated alternately with each of the plurality of cells 2. The plurality of current collectors 3 include a positive current collector 3A and a negative current collector 3B. The positive current collector 3A is in contact with the positive electrode layer 21 of the cell 2. The negative current collector 3B is in contact with the negative electrode layer 22 of the cell 2.

Specifically, in the present embodiment, from one side to the other side in a lamination direction in which the cells 2 and the current collectors 3 are laminated, a positive current collector 3A, a first cell 2A, a negative current collector 3B, a second cell 2B, and a positive current collector 3A are laminated in order. In the lamination direction, one negative current collector 3B is disposed between the negative electrode layer 22 of the first cell 2A and the negative electrode layer 22 of the second cell 2B. That is, in the lamination direction, one current collector 3 is disposed between two cells 2.

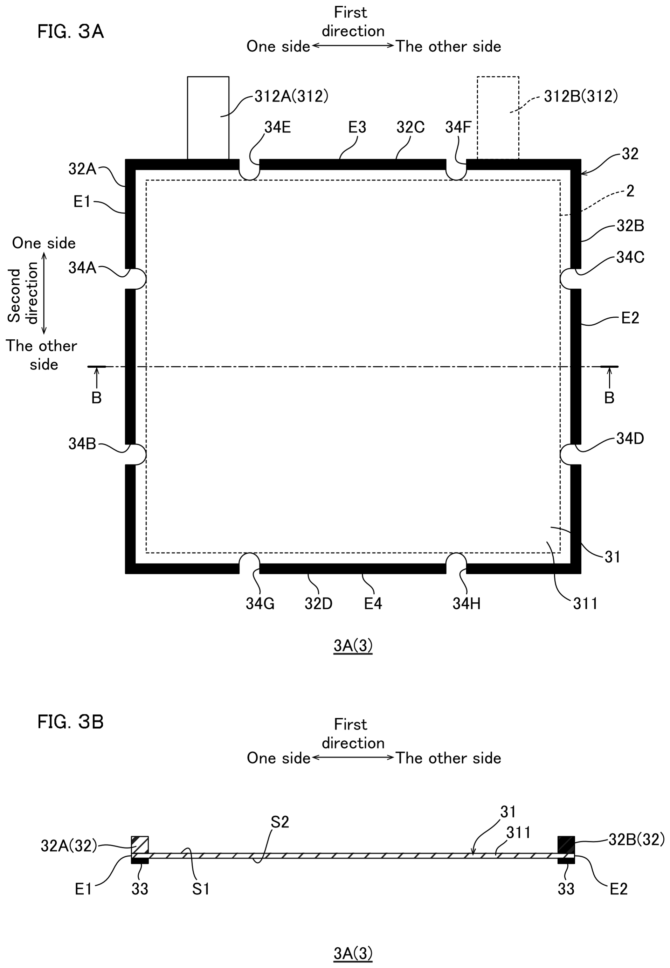

As shown in FIGS. 3A and 3B, the current collector 3 includes a conductor 31, an insulating member 32, and an adhesive layer 33. In addition, the current collector 3 includes a plurality of notches 34A, 34B, 34C, 34D, 34E, 34F, 34G, 34H in a peripheral edge portion of the current collector 3. The number of notches is not limited.

### (2-1) Conductor

The conductor 31 is, for example, made of a metal. The conductor 31 includes a laminate portion 311 and a tab 312.

The laminate portion 311 extends in a first direction and a second direction. The first direction is perpendicular to the lamination direction. The second direction is perpendicular to both the first direction and the lamination direction. The laminate portion 311 has a sheet shape. The laminate portion 311 includes a one-side surface S1 and an other-side surface S2 in the thickness direction. In other words, the conductor 31 includes the one-side surface S1 and the other-side surface S2 in the thickness direction. The laminate portion 311 is in contact with the cell 2. When the current collector 3 is a positive current collector 3A, the laminate portion 311 is in contact with the positive electrode layer 21 of the cell 2. When the current collector 3 is a negative current collector 3B, the laminate portion 311 is in contact with the negative electrode layer 22 of the cell 2. The laminate portion 311 has a substantially rectangular shape when viewed from the lamination direction. The laminate portion 311 has a plurality of edges E1, E2, E3, and E4.

The edge E1 is disposed in one end portion of the laminate portion 311 in the first direction. The edge E1 extends in the second direction. The edge E1 has a linear shape. The edge E2 is disposed in the other end portion of the laminate portion 311 in the first direction. The edge E2 extends in the second direction. The edge E2 has a linear shape. The edge E3 is disposed in one end portion of the laminate portion 311 in the second direction. The edge E3 extends in the first direction. The edge E3 has a linear shape. The edge E4 is disposed in the other end portion of the laminate portion 311 in the second direction. The edge E4 extends in the first direction. The edge E4 has a linear shape.

The tab 312 is disposed on an edge of the laminate portion 311. In the present embodiment, the tab 312 is disposed on the edge E3 at one side of the laminate portion 311 in the second direction. The tab 312 protrudes from the edge E3 of the laminate portion 311. The tab 312 may be a different member from the laminate portion 311, and may be coupled with the laminate portion 311. The tab 312 has a belt shape. The tab 312 is not in contact with the cell 2. When the current collector 3 is a positive current collector 3A, the conductor 31 has a positive electrode tab 312A as the tab 312. When the current collector 3 is a negative current collector 3B, the conductor 31 has a negative electrode tab 312B as the tab 312. In a state in which the cell 2, the positive current collector 3A, and the negative current collector 3B are laminated, the negative electrode tab 312B is disposed away from the positive electrode tab 312A. In a state in which the cell 2, the positive current collector 3A, and the negative current collector 3B are laminated, the negative electrode tab 312B does not overlap the positive electrode tab 312A in the lamination direction.

The conductor 31 has a thickness of, for example, 1 µm or more, preferably 5 µm or more, and, for example, 100 µm or less, preferably 50 µm or less.

Examples of the material for the conductor 31 include copper (Cu), magnesium (Mg), stainless steel, titanium (Ti), iron (Fe), cobalt (Co), nickel (Ni), zinc (Zn), aluminum (Al), germanium (Ge), indium (In), lithium (Li), tin (Sn), and alloys thereof.

### (2-2) Insulating Member

As shown in FIG. 3B, the insulating member 32 is laminated on the one-side surface S1 of the conductor 31. As shown in FIG. 3A, the insulating member 32 is disposed on the laminate portion 311 of the conductor 31. The insulating member 32 is laminated on the peripheral edge portion of the laminate portion 311 of the conductor 31. The insulating member 32 has a substantially rectangular frame shape when viewed from the lamination direction. The insulating member 32 has a portion 32A extending along the edge E1 of the conductor 31, a portion 32B extending along the edge E2 of the conductor 31, a portion 32C extending along the edge E3 of the conductor 31, and a portion 32D extending along the edge E4 of the conductor 31. The insulating member 32 is not disposed on the tab 312 of the conductor 31.

In a state in which the cell 2, the positive current collector 3A, and the negative current collector 3B are laminated, the insulating member 32 is disposed around the cell 2. As shown in FIG. 1B, in a state in which the cell 2, the positive current collector 3A, and the negative current collector 3B are laminated, the insulating member 32 is disposed between the positive current collector 3A and the negative current collector 3B in the lamination direction. In a state in which the cell 2, the positive current collector 3A, and the negative current collector 3B are laminated, the insulating member 32 insulates the positive current collector 3A from the negative current collector 3B.

In the lamination direction, the thickness of the insulating member 32 is thinner than the thickness of the cell 2. When the current collector 3 does not include an adhesive layer 33, the thickness of the insulating member 32 may be the same as the thickness of the cell 2. The thickness of the insulating member 32 is, for example, 50 µm or more, preferably 75 µm or more, and, for example, 500 µm or less, preferably 400 µm or less.

Examples of the material for the insulating member 32 include polyethylene terephthalate and polyimide.

### (2-3) Adhesive Layer

As shown in FIG. 3B, the adhesive layer 33 is laminated on the other-side surface S2 of the conductor 31 in the peripheral edge portion of the conductor 31. The current collector 3 may not include an adhesive layer 33. As shown in FIG. 1B, in a state in which one cell 2 is laminated between two current collectors 3, the adhesive layer 33 of the current collector 3 disposed at the other side of the cell 2 in the lamination direction is adhered to the insulating member 32 of the current collector 3 disposed at one side of the cell 2 in the lamination direction.

The total sum of the thickness of the adhesive layer 33 and the thickness of the insulating member 32 is the thickness of the cell 2 or less. The thickness of the adhesive layer 33 is, for example, 30 µm or more, preferably 50 µm or more, and, for example, 300 µm or less, preferably 200 µm or less.

The adhesive layer 33 is preferably insulating. Examples of the material for the adhesive layer 33 include resins such as acrylic, polyimide, silicone, and nonwoven fabrics impregnated with these resins.

### (2-4) Notch

As shown in FIG. 3A, the notches 34A, 34B are disposed in one end portion of the current collector 3 in the first direction. Each of the notches 34A, 34B is cut from the edge E1 of the conductor 31 inwardly through the insulating member 32. Specifically, each of the notches 34A, 34B extends from the edge E1 toward the edge E2 of the conductor 31 in the first direction. Each of the notches 34A, 34B extends to a portion between the portion 32A and the portion 32B of the insulating member 32 in the first direction. In the portions where the notches 34A, 34B are formed, the insulating member 32 is interrupted.

The notches 34C, 34D are disposed in the other end portion of the current collector 3 in the first direction. Each of the notches 34C, 34D is cut from the edge E2 of the conductor 31 inwardly through the insulating member 32. Specifically, each of the notches 34C, 34D extends from the edge E2 of the conductor 31 toward the edge E1 in the first direction. Each of the notches 34C, 34D extends to a portion between the portion 32A and the portion 32B of the insulating member 32 in the first direction. In the portions where the notches 34C, 34D are formed, the insulating member 32 is interrupted. The notch 34C is spaced apart from the notch 34A in the first direction. The notch 34D is spaced apart from the notch 34B in the first direction.

The notches 34E, 34F are disposed in one end portion of the current collector 3 in the second direction. Each of the notches 34E, 34F is cut from the edge E3 of the conductor 31 inwardly through the insulating member 32. Specifically, each of the notches 34E, 34F extends from the edge E3 of the conductor 31 toward the edge E4 in the second direction. Each of the notches 34E, 34F extends to a portion between the portion 32C and the portion 32D of the insulating member 32 in the second direction. In the portions where the notches 34E, 34F are formed, the insulating member 32 is interrupted.

The notches 34G, 34H are disposed in the other end portion of the current collector 3 in the second direction. Each of the notches 34G, 34H is cut from the edge E4 of the conductor 31 inwardly through the insulating member 32. Specifically, each of the notches 34G, 34H extends from the edge E4 toward the edge E3 of the conductor 31 in the second direction. Each of the notches 34G, 34H extends to a portion between the portion 32C and the portion 32D of the insulating member 32 in the second direction. In the portions where the notches 34G, 34H are formed, the insulating member 32 is interrupted. The notch 34G is spaced apart from the notch 34E in the second direction. The notch 34H is spaced apart from the notch 34F in the first direction.

In a state in which the cell 2 and the current collector 3 are laminated, the cell 2 is disposed between the notches 34A, 34B and the notches 34C, 34D in the first direction. In a state in which the cell 2 and the current collector 3 are laminated, the cell 2 is disposed between the notches 34E, 34F and the notches 34G, 34H in the second direction.

The shape of each of the notches 34A, 34B, 34C, 34D, 34E, 34F, 34G, 34H is not limited. Examples of the shape of each of the notches 34A, 34B, 34C, 34D, 34E, 34F, 34G, 34H include an arc shape, a triangular shape, a rectangular shape, and a trapezoidal shape. The shapes of the notches 34A, 34B, 34C, 34D, 34E, 34F, 34G, 34H may be the same as or different from each other.

### (3) Positive Electrode Lead and Negative Electrode Lead

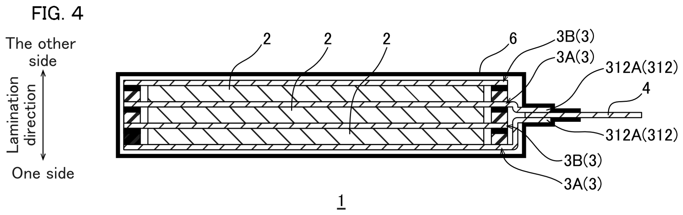

As shown in FIG. 1A, a portion of the positive electrode lead 4 is exposed from the exterior material 6. As shown in FIG. 4, the positive electrode lead 4 is bonded to the positive electrode tab 312A in the exterior material 6. Thus, the positive electrode lead 4 is electrically connected to the positive current collector 3A. The positive electrode lead 4 is not connected to the negative current collector 3B.

As shown in FIG. 1A, a portion of the negative electrode lead 5 is exposed from the exterior material 6. The negative electrode lead 5 is bonded to the negative electrode tab 312B (see FIG. 3A) in the exterior material 6. Thus, the negative electrode lead 5 is electronically connected to the negative current collector 3B (see FIG. 1B). The negative electrode lead 5 is not connected to the positive current collector 3A.

Each of the positive electrode lead 4 and the negative electrode lead 5 has, for example, a substantially rectangular flat board shape. Examples of the material for the positive electrode lead 4 and the negative electrode lead 5 include pure metals, and alloys. Examples of the pure metals include copper, nickel, aluminum, gold, and platinum. Examples of the alloys include alloys of the above-described pure metals, stainless steel, and titanium. The positive electrode lead 4 and negative electrode lead 5 may be plated. For example, the positive electrode lead 4 and negative electrode lead 5 may be a copper plate with a nickel-plated layer and a gold-plated layer.

### (4) Exterior Material

As shown in FIGS. 1A and 1B, the exterior material 6 covers the laminate of the cells 2 and the current collectors 3. Examples of the exterior material 6 include a metal laminate film in which a resin film is laminated on both surfaces of a metal foil.

### 2. Method of Producing All-solid-state Battery

Next, a method of producing the all-solid-state battery 1 is described.

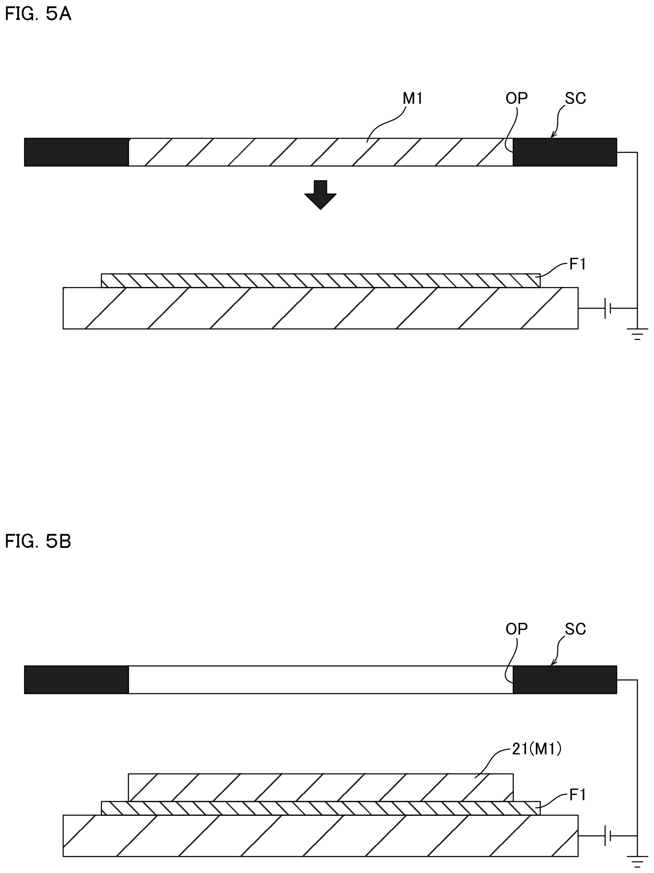

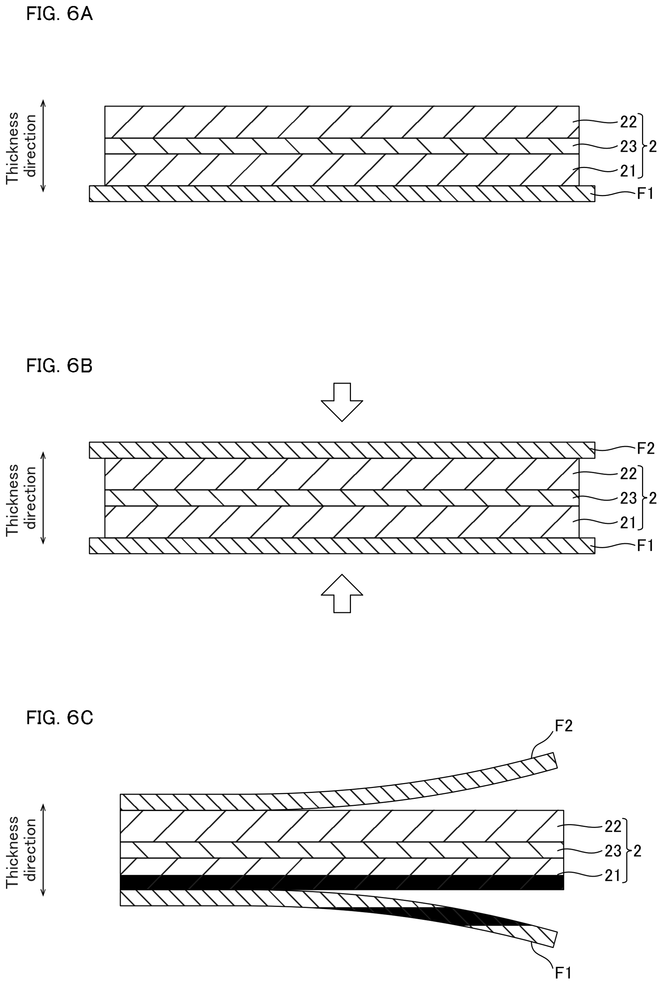

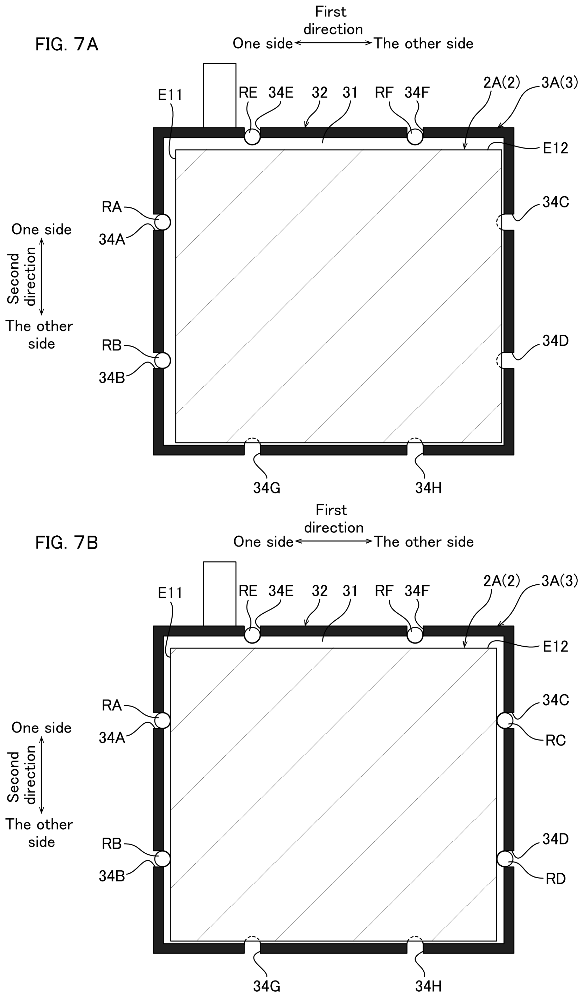

The method of producing the all-solid-state battery 1 includes a cell forming step (see FIGS. 5A to 6A), a press step (see FIG. 6B), a cutting step, a peeling step (see FIG. 6C), and a laminating step (see FIGS. 7A to 9B).

### (1) Cell Forming Step

In the cell forming step, a cell 2 is formed on a first substrate F1 in a dry process. Specifically, a cell 2 is formed on a first substrate F1 by electrostatic screen printing.

Specifically, first, a positive electrode composite material is prepared by mixing a powder of a positive electrode active material and a powder of a solid electrolyte. Further, a negative electrode composite material is prepared by mixing a powder of a negative electrode active material and a powder of a solid electrolyte. The positive electrode composite material and the negative electrode composite material do not contain a resin such as a binder and a liquid such as an organic solvent. The positive electrode composite material preferably consists of a powder of a positive electrode active material and a powder of a solid electrolyte. The negative electrode composite material preferably consists of a powder of a negative electrode active material and a powder of a solid electrolyte.

Next, as shown in FIG. 5A, in a screen SC with an opening OP having a predetermined volume, the opening OP is filled with a positive electrode composite material M1.

Next, as shown in FIG. 5B, the positive electrode composite material M1 in the opening OP is extruded toward the first substrate F1, and transferred on the first substrate F1 by electrostatic force. Thus, a positive electrode layer 21 is formed on the first substrate F1.

Next, in the same manner as the formation of the positive electrode layer 21, a solid electrolyte layer 23 is formed on the positive electrode layer 21, and a negative electrode layer 22 is formed on the solid electrolyte layer 23.

In this manner, as shown in FIG. 6A, a cell 2 is formed on the first substrate F1.

The material for the first substrate F1 is not limited as long as it can be used for electrostatic screen printing. Examples of the material for the first substrate F1 include a metal foil. Examples of the metal foil include aluminum foil.

As long as the cell 2 can be formed, the order of forming the positive electrode layer 21, the negative electrode layer 22, and the solid electrolyte layer 23 is not limited. A negative electrode layer 22 may be formed on the first substrate F1, and a solid electrolyte layer 23 may be formed on the negative electrode layer 22, and then a positive electrode layer 21 may be formed on the solid electrolyte layer 23.

### (2) Press Step

The press step is carried out after the cell forming step. As shown in FIG. 6B, in the press step, a second substrate F2 is laminated on the cell 2, and a resulting laminate L is pressed. The resulting laminate L is a laminate of the first substrate F1, the cell 2, and the second substrate F2.

The material for the second substrate F2 may be the same as or different from the material for the first substrate F1.

The pressure to be applied to the laminate L is not limited as long as the cell 2 can be formed. The pressure to be applied to the laminate L is, for example, 50 MPa or more, preferably 300 MPa or more, and, for example, 5000 MPa or less, preferably 3000 MPa or less.

### (3) Cutting Step

The cutting step is carried out after the press step. In the cutting step, the cell 2 is cut into a desired shape. In the present embodiment, the cell 2 is cut into a substantially rectangular shape when viewed from the thickness direction of the cell 2.

### (4) Peeling Step

The peeling step is carried out after the cutting step. The peeling step may be carried out before the cutting step. In the peeling step, as shown in FIG. 6C, at least one of the first substrate F1 and the second substrate F2 is peeled from the cell 2. In the present embodiment, both the first substrate F1 and the second substrate F2 are peeled from the cell 2. As described in the modified examples below, to suppress the collapse of the cell 2, only one of the first substrate F1 and the second substrate F2 may be peeled from the cell 2.

### (5) Laminating Step

In the laminating step, the cell 2 and the current collector 3 are alternately laminated.

In detail, in the laminating step, first, as shown in FIG. 7A, jigs RA, RB, RE, RF are disposed in the notches 34A, 34B, 34E, 34F of the positive current collector 3A. In detail, the jig RA is disposed in the notch 34A, the jig RB is disposed in the notch 34B, the jig RE is disposed in the notch 34E, the jig RF is disposed in the notch 34F. Each of the jigs RA, RB, RE, RF extends in the lamination direction. Each of the jigs RA, RB, RE, RF is, for example, a rod. Each of the jigs RA, RB, RE, RF has a cylindrical shape.

Next, a first cell 2A is laminated on the positive current collector 3A. In detail, the first cell 2A is laminated on the conductor 31 of the positive current collector 3A inside the insulating member 32 of the positive current collector 3A. Thus, in a state in which the first cell 2A is laminated on the conductor 31 of the positive current collector 3A, the insulating member 32 of the positive current collector 3A is disposed around the first cell 2A. In addition, in a state in which the first cell 2A is laminated on the positive current collector 3A, the positive electrode layer 21 of the first cell 2A (see FIG. 6C) is in contact with the conductor 31 of the positive current collector 3A.

Next, as shown in FIG. 7B, the position of the first cell 2A is determined with respect to the positive current collector 3A in the first direction so that the edge E11 of the first cell 2A is in contact with the jigs RA, RB. The edge E11 is an edge in one end portion of the first cell 2A in the first direction. In detail, from the other side in the first direction, the first cell 2A is pushed toward the jigs RA, RB with the jigs RC, RD. At the time, the jig RC enters the notch 34C, and the jig RD enters the notch 34D. The edge E11 is brought into contact with the jigs RA, RB, and thus the position of the first cell 2A is determined with respect to the positive current collector 3A in the first direction.

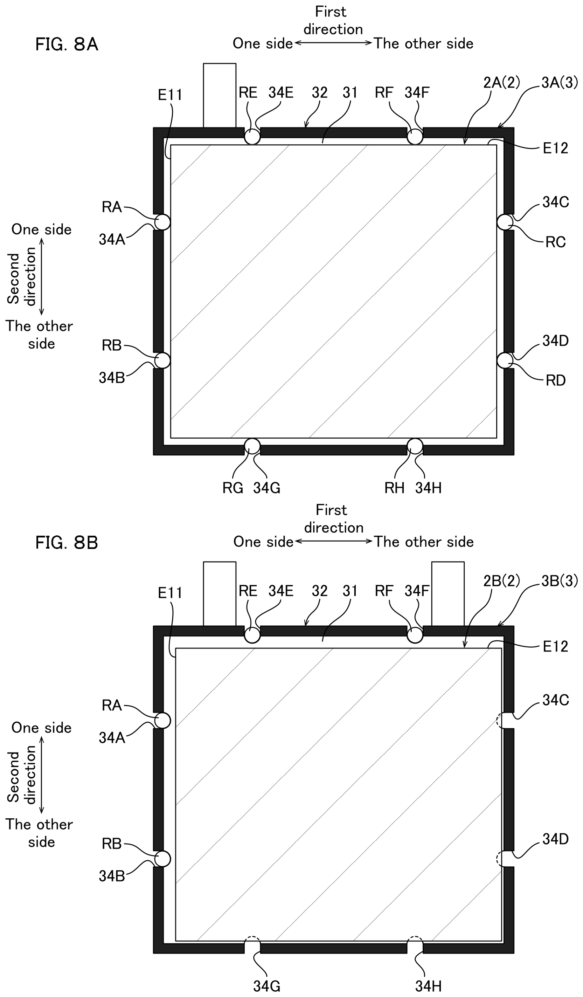

Next, as shown in FIG. 8A, the position of the first cell 2A is determined with respect to the positive current collector 3A in the second direction so that the edge E12 of the first cell 2A is in contact with the jigs RE, RF. The edge E12 is an edge in one end portion of the first cell 2A in the second direction. In detail, from the other side in the second direction, the first cell 2A is pushed toward the jigs RE, RF with the jigs RG, RH. At the time, the jig RG enters the notch 34G, and the jig RH enters the notch 34H. The edge E12 is brought into contact with the jigs RE, RF, and thus the position of the first cell 2A is determined with respect to the positive current collector 3A in the second direction.

Next, as shown in FIG. 8B, a negative current collector 3B is laminated on the first cell 2A (first step), and the jigs RA, RB, RE, RF are disposed in the notches 34A, 34B, 34E, 34F of the negative current collector 3B. In a state in which the negative current collector 3B is laminated on the first cell 2A, the conductor 31 of the negative current collector 3B is in contact with the negative electrode layer 22 of the first cell 2A (see FIG. 6C).

Next, a second cell 2B is laminated on the negative current collector 3B (the second step). In detail, the second cell 2B is laminated on the conductor 31 of the negative current collector 3B inside the insulating member 32 of the negative current collector 3B. In a state in which the second cell 2B is laminated on the negative current collector 3B, the negative electrode layer 22 of the second cell 2B is in contact with the conductor 31 of the negative current collector 3B. In other words, when the negative electrode layer 22 of the first cell 2A is in contact with the current collector 3 (negative current collector 3B), the second cell 2B is laminated on the negative current collector 3B so that the negative electrode layer 22 of the second cell 2B is in contact with the negative current collector 3B.

When the positive electrode layer 21 of the first cell 2A is in contact with the current collector 3 (positive current collector 3A), the second cell 2B is laminated on the positive current collector 3A so that the positive electrode layer 21 of the second cell 2B is in contact with the positive current collector 3A.

In this manner, in the laminating step, the cell 2 and the current collector 3 are alternately laminated so that one current collector 3 (the negative current collector 3B in the present embodiment) is disposed between two cells 2 (the first cell 2A and the second cell 2B).

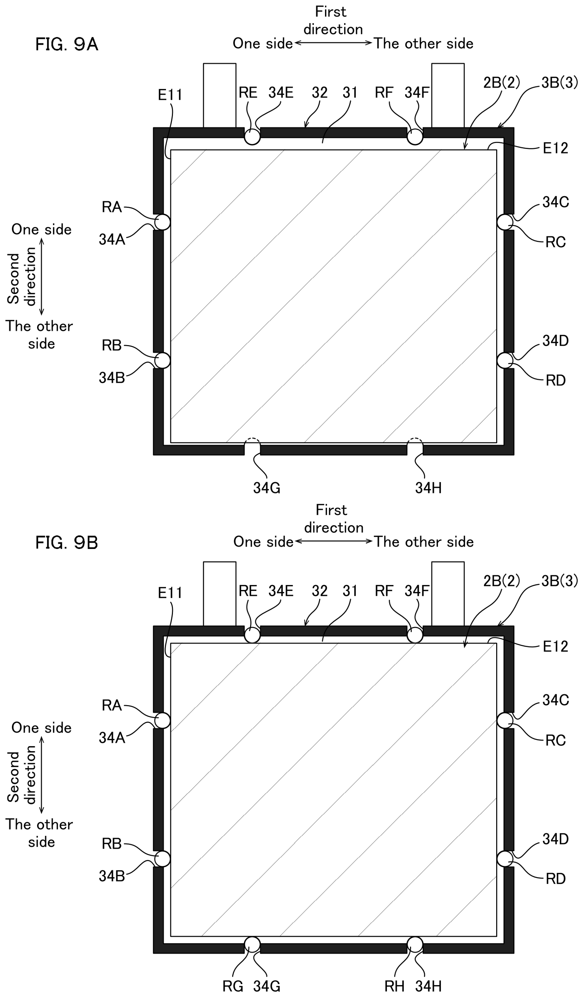

Further, as shown in FIG. 9A and FIG. 9B, every time a cell 2 is laminated on a current collector 3, the position of the cell 2 is determined with respect to the current collector 3 in the first direction (see FIG. 9A) so that the edge E11 of the cell 2 is in contact with the jigs RA, RB. Then, the position of the cell 2 is determined with respect to the current collector 3 in the second direction (see FIG. 9B) so that the edge E12 of the cell 2 is in contact with the jigs RE, RF.

A desired number of cells 2 and a desired number of current collectors 3 are laminated, and then the laminating step is completed.

After the laminating step, the positive electrode tab 312A is bonded to the positive electrode lead 4, the negative electrode tab 312B is bonded to the negative electrode lead 5, and the laminate of the cells 2 and the current collectors 3 is vacuum-packed in the exterior material 6.

As described above, the production of the above-described all-solid-state battery 1 (see FIG. 1A) is completed.

### 3. Production Apparatus for Producing All-solid-state Battery

Next, a production apparatus 10 which can be used in the laminating step of the above-described method of producing the all-solid-state battery 1 is described.

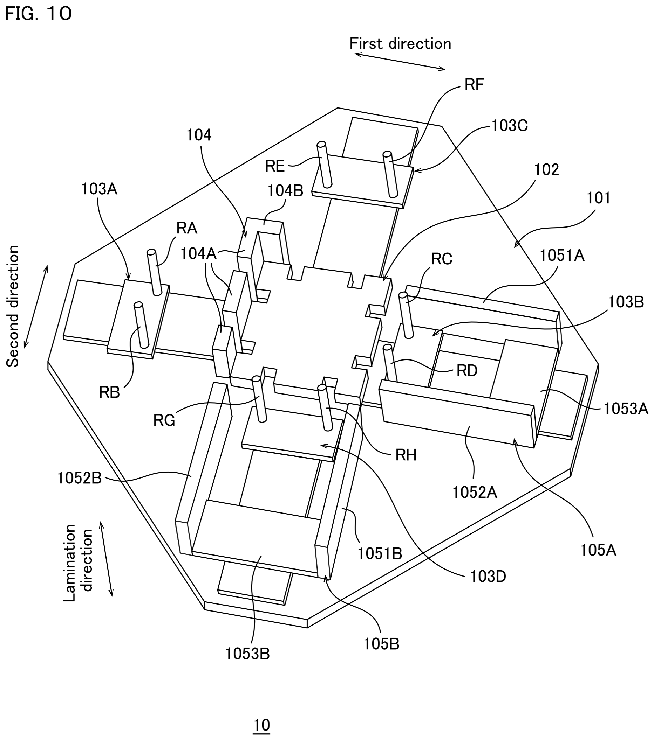

As shown in FIG. 10, the production apparatus 10 includes a base 101, a support table 102, four movement members 103A, 103B, 103C, 103D, a position determining member 104, and two movement members 105A, 105B.

### (1) Base 101

The base 101 supports the support table 102, the four movement members 103A, 103B, 103C, 103D, the position determining member 104, and the two movement members 105A, 105B. In the present embodiment, the base 101 has a flat board shape. The base 101 extends in the first direction and the second direction. The shape of the base 101 is not limited.

### (2) Support Table 102

The support table 102 is fixed to the base 101. In the present embodiment, the support table 102 has a substantially rectangular flat board shape. The support table 102 extends in the first direction and the second direction. The support table 102 is capable of supporting the current collector 3.

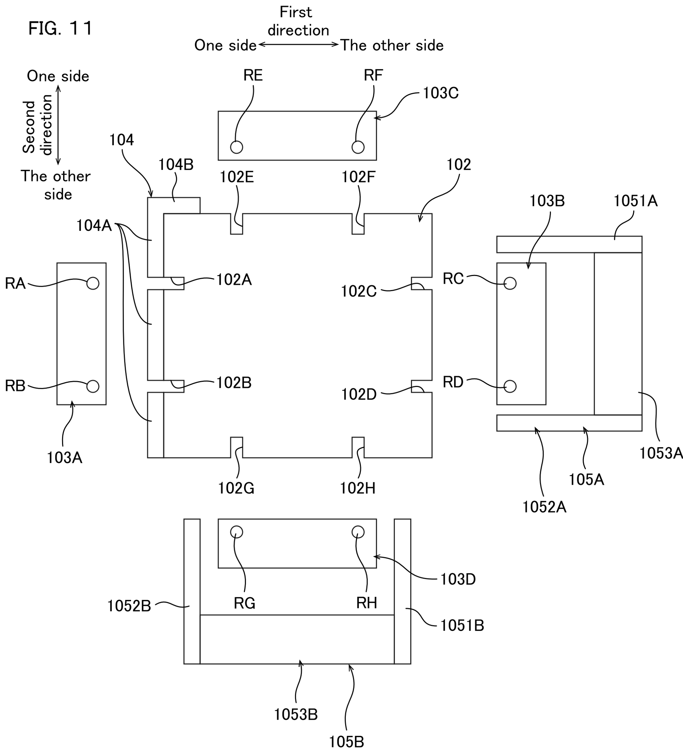

As shown in FIG. 11, the support table 102 has a plurality of grooves 102A, 102B, 102C, 102D, 102E, 102F, 102G, 102H.

The grooves 102A, 102B are disposed in one end portion of the support table 102 in the first direction. Each of the grooves 102A, 102B extends from the edge of one side of the support table 102 toward the other side in the first direction.

The grooves 102C, 102D are disposed in the other end portion of the support table 102 in the first direction. Each of the grooves 102C, 102D extends from the edge of the other side of the support table 102 toward the one side in the first direction. The groove 102C is spaced apart from the groove 102A in the first direction. The groove 102D is spaced apart from the groove 102B in the first direction.

The grooves 102E, 102F are disposed in one end portion of the support table 102 in the second direction. Each of the grooves 102E, 102F extends from the edge of one side of the support table 102 toward the other side in the second direction.

The grooves 102G, 102H are disposed in the other end portion of the support table 102 in the second direction. Each of the grooves 102G, 102H extends from the edge of the other side of the support table 102 toward the one side in the second direction. The groove 102G is spaced apart from the groove 102E in the second direction. The groove 102H is spaced apart from the groove 102F in the second direction.

### (3) Movement Members 103A, 103B, 103C, 103D

As shown in FIG. 10, the movement member 103A is disposed at one side of the support table 102 in the first direction. The movement member 103A includes the above-described jigs RA, RB. The shape of the movement member 103A is not limited. In the present embodiment, the movement member 103A extends in the second direction. The movement member 103A has a substantially rectangular flat board shape.

The movement member 103B is disposed at the other side of the support table 102 in the first direction. The movement member 103B includes the above-described jigs RC, RD. The shape of the movement member 103B is not limited. In the present embodiment, the movement member 103B extends in the second direction. The movement member 103B has a substantially rectangular flat board shape.

The movement member 103C is disposed at one side of the support table 102 in the second direction. The movement member 103C includes the above-described jigs RE, RF. The shape of the movement member 103C is not limited. In the present embodiment, the movement member 103C extends in the first direction. The movement member 103C has a substantially rectangular flat board shape.

The movement member 103D is disposed on the other side of the support table 102 in the second direction. The movement member 103D includes the above-described jigs RG, RH. The shape of the movement member 103D is not limited. In the present embodiment, the movement member 103D extends in the first direction. The movement member 103D has a substantially rectangular flat board shape.

Each of the movement members 103A, 103B, 103C, 103D is moveably attached to the base 101.

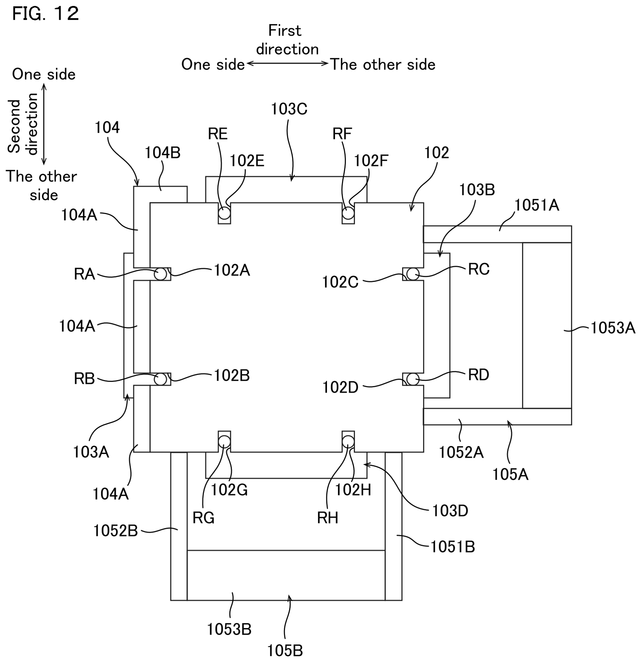

As shown in FIGS. 11 and 12, the movement member 103A is movable between a first separated position (see FIG. 11) and a first proximate position (see FIG. 12) in the first direction. In a state in which the movement member 103A is disposed at the first separated position, the movement member 103A is disposed away from the support table 102 in the first direction. In a state in which the movement member 103A is disposed at the first proximate position, the movement member 103A is disposed closer to the support table 102 than the first separated position in the first direction. In a state in which the movement member 103A is disposed at the first proximate position, the jig RA enters the groove 102A of the support table 102, and the jig RB enters the groove 102B of the support table 102.

The movement member 103B is movable between a second separated position (see FIG. 11) and a second proximate position (see FIG. 12) in the first direction. In a state in which the movement member 103B is disposed at the second separated position, the movement member 103B is disposed away from the support table 102 in the first direction. In a state in which the movement member 103B is disposed at the second proximate position, the movement member 103B is disposed closer to the support table 102 than the second separated position in the first direction. In a state in which the movement member 103B is disposed at the second proximate position, the jig RC enters the groove 102C of the support table 102, and the jig RD enters the groove 102D of the support table 102.

The movement member 103C is movable between a third separated position (see FIG. 11) and a third proximate position (see FIG. 12) in the second direction. In a state in which the movement member 103C is disposed at the third separated position, the movement member 103C is disposed away from the support table 102 in the second direction. In a state in which the movement member 103C is disposed at the third proximate position, the movement member 103C is disposed closer to the support table 102 than the third separated position in the second direction. In a state in which the movement member 103C is disposed at the third proximate position, the jig RE enters the groove 102E of the support table 102, and the jig RF enters the groove 102F of the support table 102.

The movement member 103D is movable between a fourth separated position (see FIG. 11) and a fourth proximate position (see FIG. 12) in the second direction. In a state in which the movement member 103D is disposed at the fourth separated position, the movement member 103D is disposed away from the support table 102 in the second direction. In a state in which the movement member 103D is disposed at the fourth proximate position, the movement member 103D is disposed closer to the support table 102 than the fourth separated position in the second direction. In a state in which the movement member 103D is disposed at the fourth proximate position, the jig RG enters the groove 102G of the support table 102, and the jig RH enters the groove 102H of the support table 102.

### (4) Position Determining Member 104

As shown in FIG. 10, the position determining member 104 is fixed to the support table 102. In a state in which a current collector 3 is placed on the support table 102, the position determining member 104 determines the position of the current collector 3 with respect to the support table 102. The position determining member 104 includes a first position determining portion 104A and a second position determining portion 104B.

The first position determining portion 104A is disposed in one end portion of the support table 102 in the first direction. In a state in which a current collector 3 is placed on the support table 102, the first position determining portion 104A determines the position of the current collector 3 with respect to the support table 102 in the first direction. The first position determining portion 104A extends in the second direction and the lamination direction.

The second position determining portion 104B is disposed in one end portion of the support table 102 in the second direction. In a state in which a current collector 3 is placed on the support table 102, the second position determining portion 104B determines the position of the current collector 3 with respect to the support table 102 in the second direction. The second position determining portion 104B extends in the first direction and the lamination direction.

### (5) Movement Members 105A, 105B

As shown in FIG. 10, the movement member 105A is disposed at the other side of the support table 102 in the first direction. The movement member 105A includes two abutment portions 1051A, 1052A, and a support portion 1053A.

The abutment portion 1051A is disposed at one side relative to the movement member 103B in the second direction. The abutment portion 1051A extends in the first direction and the lamination direction. In the present embodiment, the abutment portion 1051A has a substantially rectangular board shape. The shape of the abutment portion 1051A is not limited.

The abutment portion 1052A is disposed away from the abutment portion 1051A in the second direction. The abutment portion 1052A is disposed at the other side relative to the movement member 103B in the second direction. The abutment portion 1052A extends in the first direction and the lamination direction. In the present embodiment, the abutment portion 1052A has a board shape. The shape of the abutment portion 1052A is not limited.

The support portion 1053A supports the abutment portion 1051A and the abutment portion 1052A. The support portion 1053A extends in the second direction. The abutment portion 1051A is attached to one end portion of the support portion 1053A in the second direction. The abutment portion 1052A is attached to the other end portion of the support portion 1053A in the second direction. The support portion 1053A has a substantially rectangular plate shape. The shape of the support portion 1053A is not limited.

The movement member 105B is disposed on the other side of the support table 102 in the second direction. The movement member 105B includes two abutment portions 1051B, 1052B, and a support portion 1053B.

The abutment portion 1051B is disposed at the other side relative to the movement member 103D in the first direction. The abutment portion 1051B extends in the second direction and the lamination direction. In the present embodiment, the abutment portion 1051B has a substantially rectangular board shape. The shape of the abutment portion 1051B is not limited.

The abutment portion 1052B is disposed away from the abutment portion 1051B in the first direction. The abutment portion 1052B is disposed at one side relative to the movement member 103D in the first direction. The abutment portion 1052B extends in the first direction and the lamination direction. In the present embodiment, the abutment portion 1052B has a board shape. The shape of the abutment portion 1052B is not limited.

The support portion 1053B supports the abutment portion 1051B and the abutment portion 1052B. The support portion 1053B extends in the first direction. The abutment portion 1051B is attached to one end portion of the support portion 1053B in the first direction. The abutment portion 1052B is attached to the other end portion of the support portion 1053B in the first direction. The support portion 1053B has a substantially rectangular board shape. The shape of the support portion 1053B is not limited.

Each of the movement members 105A, 105B is moveably attached to the base 101.

As shown in FIGS. 11 and 12, the movement member 105A is movable between a fifth separated position (see FIG. 11) and a fifth proximate position (see FIG. 12) in the first direction. In a state in which the movement member 105A is disposed at the fifth separated position, the movement member 105A is disposed away from the support table 102 in the first direction. In a state in which the movement member 105A is disposed at the fifth proximate position, the movement member 105A is disposed closer to the support table 102 than the fifth separated position in the first direction. When the movement member 105A moves from the fifth separated position toward the fifth proximate position in a state in which a current collector 3 is placed on the support table 102, the abutment portion 1051A and the abutment portion 1052A can abut the current collector 3 on the support table 102.

The movement member 105B is movable between a sixth separated position (see FIG. 11) and a sixth proximate position (see FIG. 12) in the second direction. In a state in which the movement member 105B is disposed at the sixth separated position, the movement member 105B is disposed away from the support table 102 in the second direction. In a state in which the movement member 105B is disposed at the sixth proximate position, the movement member 105B is disposed closer to the support table 102 than the sixth separated position in the second direction. When the movement member 105B moves from the sixth separated position toward the sixth proximate position in a state in which a current collector 3 is placed on the support table 102, the abutment portion 1051B and the abutment portion 1052B can abut the current collector 3 on the support table 102.

### (6) Operation of Production Apparatus in Laminating Step

Next, the operation of the production apparatus 10 in the above-described laminating step is described.

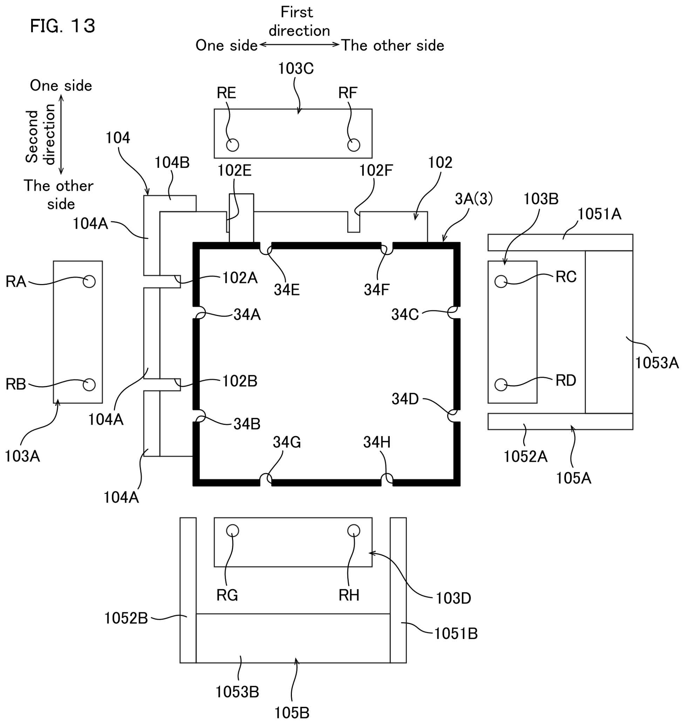

When the production apparatus 10 is used in the above-described laminating step, as shown in FIG. 13, first, a positive current collector 3A is placed on the support table 102 in a state in which the movement member 103A is disposed at the first separated position, the movement member 103B is disposed at the second separated position, the movement member 103C is disposed at the third separated position, the movement member 103D is disposed at the fourth separated position, the movement member 105A is disposed at the fifth separated position, and the movement member 105B is disposed at the sixth separated position.

In a state in which the positive current collector 3A is placed on the support table 102, the notches 34A, 34B are disposed in one end portion of the positive current collector 3A in the first direction, the notches 34C, 34D are disposed in the other end portion of the positive current collector 3A in the first direction, the notches 34E, 34F are disposed in one end portion of the positive current collector 3A in the second direction, and the notches 34G, 34H are disposed in the other end portion of the positive current collector 3A in the second direction.

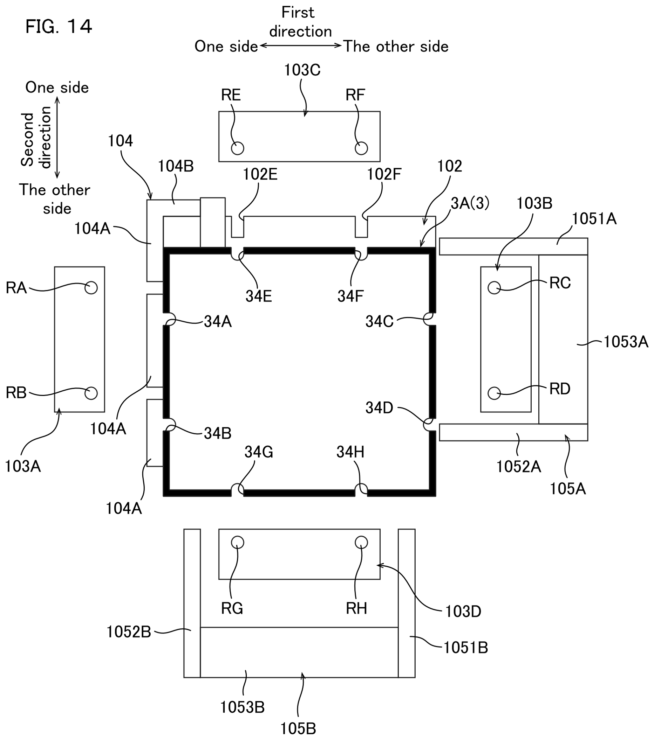

Next, as shown in FIG. 14, the movement member 105A is moved from the fifth separated position to the fifth proximate position. When the movement member 105A moves from the fifth separated position toward the fifth proximate position, the positive current collector 3A is pushed by the abutment portion 1051A and the abutment portion 1052A of the movement member 105A and moved toward the first position determining portion 104A. That is, the movement member 105A moves from the fifth separated position toward the fifth proximate position, and thus the movement member 105A moves the current collector 3 placed on the support table 102 toward the first position determining portion 104A.

The positive current collector 3A pushed by the movement member 105A is brought into contact with the first position determining portion 104A, thereby determining the position of the positive current collector 3A with respect to the support table 102 in the first direction.

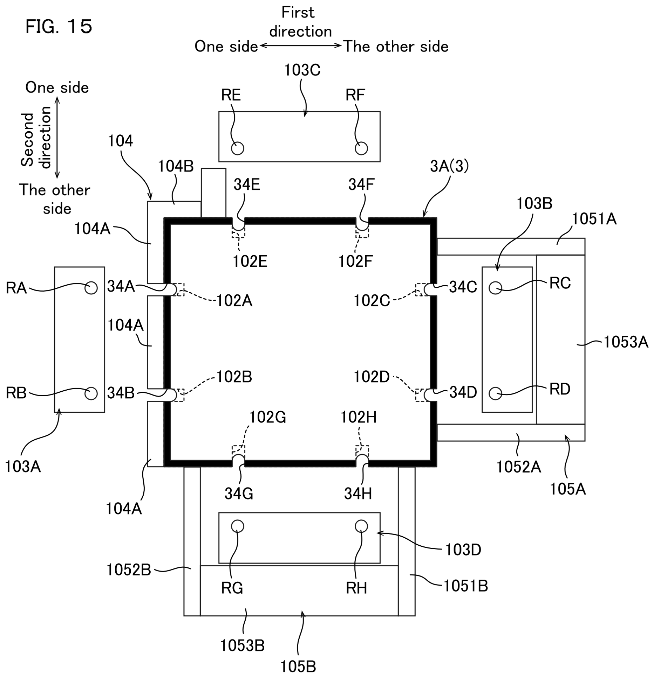

Next, as shown in FIG. 15, the movement member 105B is moved from the sixth separated position to the sixth proximate position. When the movement member 105B moves from the sixth separated position toward the sixth proximate position, the positive current collector 3A is pushed by the abutment portion 1051B and the abutment portion 1052B of the movement member 105B, and moved toward the second position determining portion 104B. That is, the movement member 105B moves from the sixth separated position toward the sixth proximate position, and thus the movement member 105B moves the current collector 3 placed on the support table 102 toward the second position determining portion 104B.

The positive current collector 3A pushed by the movement member 105A is brought into contact with the second position determining portion 104B, thereby determining the position of the positive current collector 3A with respect to the support table 102 in the second direction.

In a state in which the position of the positive current collector 3A is determined with respect to the support table 102 in both the first direction and the second direction, the notch 34A overlaps the groove 102A, the notch 34B overlaps the groove 102B, the notch 34C overlaps the groove 102C, the notch 34D overlaps the groove 102D, the notch 34E overlaps the groove 102E, the notch 34F overlaps the groove 102F, the notch 34G overlaps the groove 102G, and the notch 34H overlaps the groove 102H.

Next, the movement member 103A (see FIG. 15) is moved from the first separated position to the first proximate position, and the movement member 103C (see FIG. 15) is moved from the third separated position to the third proximate position.

Then, in a state in which the movement member 103A is disposed at the first proximate position, as shown in FIG. 7A, the jig RA is disposed in the notch 34A, and the jig RB is disposed in the notch 34B. In a state in which the movement member 103C is disposed at the third proximate position, the jig RE is disposed in the notch 34E, and the jig RF is disposed in the notch 34F.

Next, as described above, the first cell 2A is laminated on the positive current collector 3A. At the time, to secure a working space for laminating the first cell 2A on the positive current collector 3A, before the first cell 2A is laminated on the positive current collector 3A, the movement member 105A may be disposed at the fifth separated position, and the movement member 105B may also be disposed at the sixth separated position.

Next, the movement member 103B (see FIG. 15) is moved from the second separated position to the second proximate position.

Then, in a state in which the movement member 103B is disposed at the second proximate position, as shown in FIG. 7B, the jig RC is disposed in the notch 34C, and the jig RD is disposed in the notch 34D. At the time, as described above, the jigs RC, RD push the first cell 2A from the other side in the first direction toward the jigs RA, RB. The edge E11 is brought into contact with the jigs RA, RB, thereby determining the position of the first cell 2A pushed by the jigs RC, RD with respect to the positive current collector 3A in the first direction.

That is, in a state in which the current collector 3 is placed on the support table 102, the cell 2 is placed on the current collector 3, and the movement member 103A is disposed at the first proximate position, the movement member 103B is moved from the second separated position toward the second proximate position. This movement causes the jigs RC, RD to move the cell 2 toward the jigs RA, RB so that the edge E11 of the cell 2 is brought into contact with the jigs RA, RB, thereby determining the position of the cell 2 with respect to the current collector 3 in the first direction.

Next, the movement member 103D (see FIG. 15) is moved from the fourth separated position to the fourth proximate position.

Then, in a state in which the movement member 103D is disposed at the fourth proximate position, as shown in FIG. 8A, the jig RG is disposed in the notch 34G, and the jig RH is disposed in the notch 34H. At the time, as described above, the jigs RG, RH push the first cell 2A from the other side in the second direction toward the jigs RE, RF. The edge E12 is brought into contact with the jigs RE, RF, thereby determining the position of the first cell 2A pushed by the jigs RG, RH with respect to the positive current collector 3A in the second direction.

That is, in a state in which the current collector 3 is placed on the support table 102, the cell 2 is placed on the current collector 3, and the movement member 103C is disposed at the third proximate position, the movement member 103D is moved from the fourth separated position toward the fourth proximate position. This movement cause the jigs RG, RH to move the cell 2 toward the jigs RE, RF so that the edge E12 of the cell 2 is brought into contact with the jigs RE, RF, thereby determining the position of the cell 2 with respect to the current collector 3 in the second direction.

Next, again, the movement member 103A is disposed at the first separated position, the movement member 103B is disposed at the second separated position, the movement member 103C is disposed at the third separated position, the movement member 103D is disposed at the fourth separated position, the movement member 105A is disposed at the fifth separated position, the movement member 105B is disposed at the sixth separated position, and a negative current collector 3B is placed on the first cell 2A.

Next, in the same manner as for the above-described positive current collector 3A, the movement member 105A is moved from the fifth separated position to the fifth proximate position to determine the position of the negative current collector 3B with respect to the support table 102 in the first direction, and the movement member 105B is moved from the sixth separated position to the sixth proximate position to determine the position of the negative current collector 3B with respect to the support table 102 in the second direction.

Next, the movement member 103A is moved from the first separated position to the first proximate position, as shown in FIG. 8B, to dispose the jig RA in the notch 34A and the jig RB in the notch 34B. Further, the movement member 103C is moved from the third separated position to the third proximate position to dispose the jig RE in the notch 34E and the jig RF in the notch 34F. Thereafter, a second cell 2B is laminated on the negative current collector 3B.

Next, the movement member 103B is moved from the second separated position to the second proximate position, as shown in FIG. 9A, to determine the position of the second cell 2B with respect to the negative current collector 3B in the first direction.

Next, the movement member 103D is moved from the fourth separated position to the fourth proximate position, as shown in FIG. 9B, to determine the position of the second cell 2B with respect to the negative current collector 3B in the second direction.

A desired number of cells 2 and a desired number of current collectors 3 are laminated while the positions of them are determined by using the production apparatus 10, and then the above-described laminating step is completed.

### 4. Operations and Effects

(1) According to the method of producing the all-solid-state battery 1, a cell 2 is formed on the first substrate F1 in a dry process, and pressed and solidified, and thereafter the cell 2 and the current collector 3 are alternately laminated so that one current collector 3 is disposed between two cells 2.

In detail, as shown in FIG. 5A to 6A, by using electrostatic screen printing, a positive electrode layer 21, a solid electrolyte layer 23, and a negative electrode layer 22 are formed on the first substrate F1 in order. Thus, a cell 2 is formed on the first substrate F1 in a dry process (cell forming step).

Next, as shown in FIG. 6B, a second substrate F2 is laminated on the cell 2, and the resulting laminate L is pressed. As a result, the cell 2 is solidified (press step).

Next, as shown in FIG. 6C, at least one of the first substrate F1 and the second substrate F2 is peeled from the cell 2 (peeling step).

Thereafter, as shown in FIG. 1B, the cell 2 and the current collector 3 alternately laminated (laminating step) so that one current collector 3 is disposed between two cells 2.

As a result, it is possible to produce an all-solid-state battery 1 that is a bi-cell type and includes a cell 2 produced in a dry process.

Therefore, as compared with an all-solid-state battery including a cell produced by a wet process, the all-solid-state battery 1 produced as described above allows for the suppression of a decrease in power generation efficiency caused by a void generated in a cell when the solvent volatilizes and a resin such as a binder. The all-solid-state battery 1 produced as described above is bi-cell type, and thus allows for the reduction in volume and weight.

As a result, the method of producing the all-solid-state battery 1 allows for the improvement in the energy density of the all-solid-state battery 1 produced by the method.

(2) According to the method of producing the all-solid-state battery 1, as shown in FIG. 8B, the laminating step includes a first step of laminating the current collector 3 on the first cell 2A, and a second step of laminating the second cell 2B on the current collector 3, following the first step.

In FIG. 8B, the second cell 2B is laminated on the negative current collector 3B. That is, the second cell 2B is laminated on the current collector 3 in contact with the negative electrode layer 22 of the first cell 2A. Thus, the second cell 2B is laminated on the current collector 3 so that the negative electrode layer 22 of the second cell 2B is in contact with the current collector 3.

When the second cell 2B is laminated on a positive current collector 3A, the second cell 2B is laminated on the current collector 3 so that the positive electrode layer 21 of the second cell 2B is in contact with the current collector 3.

Thus, a bi-cell type all-solid-state battery 1 in which the first cell 2A and the second cell 2B are in contact with one current collector 3 is produced.

(3) According to the method of producing the all-solid-state battery 1, as shown in FIG. 3A and FIG. 3B, the current collector 3 includes a conductor 31 and an insulating member 32 laminated on the peripheral edge portion of the conductor 31. As shown in FIG. 8A, in the laminating step, the cell 2 is laminated on the conductor 31, and the insulating member 32 is disposed around the cell 2.

The current collector 3 in which the insulating member 32 is laminated on the peripheral edge portion of the conductor 31 is used, and thus it is possible to produce the all-solid-state battery 1 in a simple step of alternately laminating the cell 2 and the current collector 3.

(4) According to the method of producing the all-solid-state battery 1, as shown in FIG. 3B, the insulating member 32 is laminated on the one-side surface S1 of the conductor 31, and the current collector 3 includes the adhesive layer 33 laminated on the other-side surface S2 of the conductor 31.

Therefore, when a cell 2 is laminated on one current collector 3, and another current collector 3 is laminated on the cell 2, the adhesive layer 33 of the other current collector 3 can be adhered to the insulating member 32 of the one current collector 3.

Specifically, as shown in FIG. 1B, when a cell 2 is laminated on a positive current collector 3A (one current collector 3), and a negative current collector 3B (another current collector 3) is laminated on the cell 2, the adhesive layer 33 of the negative current collector 3B can be adhered to the insulating member 32 of the positive current collector 3A.

Thus, it is possible to suppress the short circuit between the one current collector 3 and the other current collector 3.

(5) According to the method of producing the all-solid-state battery 1, as shown in FIG. 3A, the current collector 3 includes notches 34A, 34B that are cut from the edge E1 of the conductor 31 inwardly through the insulating member 32, and notches 34E, 34F that are cut from the edge E3 of the conductor 31 inwardly through the insulating member 32.

Then, in the laminating step, as shown in FIGS. 7A and 7B, the jig RA is disposed in the notch 34A, and the jig RB is disposed in the notch 34B to determine the position of the cell 2 with respect to the current collector 3 in the first direction so that the edge E11 of the cell 2 is in contact with the jigs RA, RB.

Further, as shown in FIGS. 7B and 8A, the jig RE is disposed in the notch 34E, and the jig RF is disposed in the notch 34F to determine the position of the cell 2 with respect to the current collector 3 in the second direction so that the edge E12 of the cell 2 is in contact with the jigs RE, RF.

Thus, it is possible to easily laminate the cell 2 and the current collector 3 while suppressing the misalignment of the cell 2 with respect to the current collector 3.

(6) As shown in FIG. 10, the production apparatus 10 for producing the all-solid-state battery 1 includes the movement member 103A including the jigs RA, RB, the movement member 103B including the jigs RC, RD, the movement member 103C including the jigs RE, RF, and the movement member 103D including the jigs RG, RH.

Therefore, as shown in FIGS. 7A to 8A, in a state in which the cell 2 is laminated on the current collector 3, the position of the cell 2 can be determined with respect to the current collector 3 in the first direction and the second direction by using the movement members 103A, 103B, 103C, 103D.

As a result, it is possible to laminate the cell 2 and the current collector 3 while suppressing the misalignment of the cell 2 with respect to the current collector 3.

(7) With the production apparatus 10 for producing the all-solid-state battery 1, as shown in FIGS. 7A and 7B, in a state in which the cell 2 is placed on the current collector 3, the jig RA is disposed in the notch 34A, and the jig RB is disposed in the notch 34B (i.e., in a state in which the movement member 103A is disposed at the first proximate position), the movement member 103B is moved from the second separated position toward the second proximate position, thereby pushing the cell 2 toward the jigs RA, RB with the jigs RC, RD until the edge E11 of the cell 2 is brought into contact with the jigs RA, RB.

Thus, by using the movement member 103A and the movement member 103B, in the first direction, the position of the cell 2 can be determined with respect to the current collector 3.

Further, as shown in FIG. 7B and FIG. 8A, a state in which the jig RE is disposed in the notch 34E, and the jig RF is disposed in the notch 34F (i.e., a state in which the movement member 103C is disposed at the third proximate position), the movement member 103D is moved from the fourth separated position toward the fourth proximate position, thereby pushing the cell 2 toward the jigs RE, RF with the jigs RG, RH until the edge E12 of the cell 2 is brought into contact with the jigs RE, RF.

Thus, by using the movement member 103C and the movement member 103D, in the second direction, the position of the cell 2 can be determined with respect to the current collector 3.

(8) As shown in FIG. 10, the production apparatus 10 for producing the all-solid-state battery 1 includes the position determining member 104 fixed to the support table 102.

Therefore, as shown in FIG. 15, in a state in which the position of the current collector 3 is determined with respect to the support table 102, it is possible to laminate the cell 2 and the current collector 3.

As a result, the misalignment of the cell 2 with respect to the current collector 3 is further suppressed.

(9) According to the production apparatus 10 for producing the all-solid-state battery 1, as shown in FIGS. 13 and 14, in a state in which the current collector 3 is placed on the support table 102, the movement member 105A is moved from the fifth separated position toward the fifth proximate position, thereby pushing the cell 2 toward the first position determining portion 104A with the movement member 105A until the edge E1 of the current collector 3 is brought into contact with the first position determining portion 104A.

Thus, by using the movement member 105A, in the first direction, the position of the current collector 3 can be determined with respect to the first position determining portion 104A.

Further, as shown in FIGS. 14 and 15, the movement member 105B is moved from the sixth separated position toward the sixth proximate position, thereby pushing the cell 2 toward the second position determining portion 104B with the movement member 105B until the edge E2 of the current collector 3 is brought into contact with the second position determining portion 104B.

Thus, by using the movement member 105B, in the second direction, the position of the current collector 3 can be determined with respect to the second position determining portion 104B.

(10) According to the all-solid-state battery 1, as shown in FIG. 1B, the cell 2 and the current collector 3 are alternately laminated so that one current collector 3 is disposed between two cells 2. In other words, the all-solid-state battery 1 has a bi-cell type laminate structure.

Therefore, the energy density is improved.

Further, the current collector 3 includes a conductor 31 and an insulating member 32 laminated on the peripheral edge portion of the conductor 31.

Therefore, in a simple step of alternately laminating the cell 2 and the current collector 3, it is possible to produce an all-solid-state battery 1 while suppressing the short circuit between the conductors 31.

(11) According to the all-solid-state battery 1, as shown in FIG. 3A, the current collector 3 includes the notches 34A to 34H that are cut from the edges E1 to E4 of the conductor 31 inwardly through the insulating member 32.

Therefore, as shown in FIGS. 7A to 8A, it is possible to easily laminate the cell 2 and the current collector 3 while suppressing the misalignment of the cell 2 with respect to the current collector 3 by using the notches 34A to 34H.

Further, as shown in FIG. 3A, a portion of the insulating member 32 is notched, and thus the amount of the insulating member 32 used is reduced. Therefore, it is possible to suppress the deterioration of the cell 2 caused by the water in the insulating member 32.

(12) According to the all-solid-state battery 1, as shown in FIG. 3A, the current collector 3 includes the notches 34A to 34H in the peripheral edge portion.

Therefore, as shown in FIGS. 7A to 8A, it is possible to laminate the cell 2 and the current collector 3 while suppressing the misalignment of the cell 2 with respect to the current collector 3 by using the notches 34A to 34H.

(13) According to the all-solid-state battery 1, as shown in FIG. 3A, the notches 34A to 34H are cut from the edges E1 to E4 of the conductor 31 inwardly through the insulating member 32.

Therefore, a portion of the insulating member 32 is notched, and thus the amount of the insulating member 32 used is reduced. Therefore, it is possible to suppress the deterioration of the cell 2 caused by the water in the insulating member 32.

### 5. Modified Examples

Hereinafter, modified examples are described. In the modified examples, the same members as in the above-described embodiment are given the same numerical references and the descriptions thereof are omitted.

In the above-described embodiment, in the peeling step (see FIG. 6C), both the first substrate F1 and the second substrate F2 are peeled from the cell 2.

On the other hand, in a modified example, only one of the first substrate F1 and the second substrate F2 is peeled from the cell 2. In the modified example, the material for the substrate that is not peeled from the cell 2 is limited to a material having conductivity. Example of the material having conductivity include metal foil. Examples of the metal foil include aluminum foil.

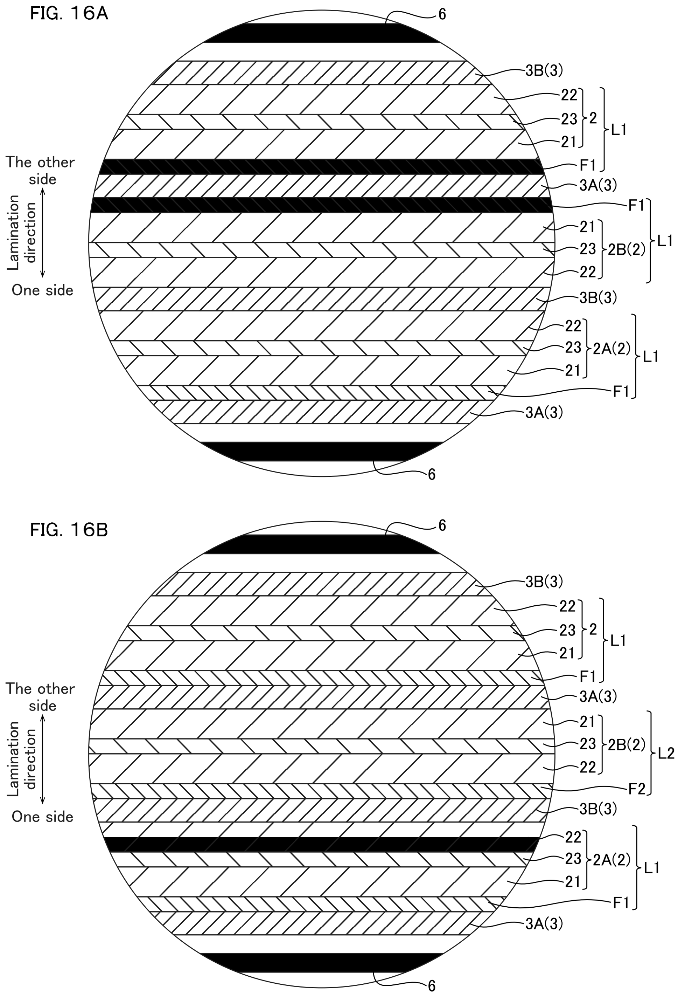

For example, when only the substrate (second substrate F2) in contact with the negative electrode layer 22 is peeled from the cell 2, a laminate L1 including the cell 2 and the substrate (first substrate F1) in contact with the positive electrode layer 21 (see FIG. 16A) is obtained.

When only the laminate L1 is produced in the peeling step, the laminate L1 and the current collector 3 are alternately laminated in the laminating step as shown in FIG. 16A. In this case, the first substrate F1 of the laminate L1 is in contact with the positive current collector 3A.

Alternatively, when only the substrate (first substrate F1) in contact with the positive electrode layer 21 is peeled from the cell 2, a laminate L2 (see FIG. 16B) including the cell 2 and the substrate (second substrate F2) in contact with the negative electrode layer 22 is obtained.

When only the laminate L2 is produced in the peeling step, the laminate L2 and the current collector 3 are alternately laminated in the laminating step. In this case, the second substrate F2 of the laminate L2 is in contact with the negative current collector 3B.

Further, when the laminate L1 and the laminate L2 are produced in the peeling step, as shown in FIG. 16B, the laminate L1, the laminate L2, and the current collector 3 are laminated so that the first substrate F1 of the laminate L1 is in contact with the positive current collector 3A and the second substrate F2 of the laminate L2 is in contact with the negative current collector 3B.

Also in the modified examples, the same operations and effects as those of the above-described embodiment can be obtained.

In addition, in this modification, the cell 2 can be supported by the substrate (the first substrate F1 or the second substrate F2) which is not peeled from the cell 2. Therefore, it is possible to suppress the collapse of the cell 2.

While the illustrative embodiments of the present invention are provided in the above-described description, such is for illustrative purpose only and it is not to be construed as limiting in any manner. Modification and variation of the present invention that will be obvious to those skilled in the art is to be covered by the following claims.

### Industrial Applicability

The method of producing an all-solid-state battery of the present invention and the production apparatus for producing an all-solid-state battery of the present invention can be used for producing an all-solid-state battery.

### Description of Reference Numerals

- 1: All-solid-state battery
- 2: Cell
- 2A: First cell
- 2B: Second cell
- 21: Positive electrode layer
- 22: Negative electrode layer
- 23: Solid electrolyte layer
- 3: Current collector
- 31: Conductor
- 32: Insulating member
- 33: Adhesive layer
- 34A: Notch
- E1: Edge of conductor
- E11: Edge of cell
- F1: First substrate
- F2: Second substrate
- RA: Jig
- S1: One-side surface of conductor
- S2: The other-side surface of conductor

## Claims

1. A method of producing an all-solid-state battery, the method comprising:
a cell forming step of forming a cell on a first substrate in a dry process, the cell including a positive electrode layer made of a powder containing a positive electrode active material, a negative electrode layer made of a powder containing a negative electrode active material, and a solid electrolyte layer disposed between the positive electrode layer and the negative electrode layer and made of a powder of a solid electrolyte;
a press step of laminating a second substrate on the cell and then pressing a laminate produced by the lamination;
a peeling step of peeling at least one of the first substrate and the second substrate from the cell; and
a laminating step of alternately laminating the cell and a current collector so that the current collector is disposed between two of the cells.

2. The method according to claim 1, wherein the laminating step includes:
a first step of laminating the current collector on a first cell; and
a second step of laminating a second cell on the current collector, following the first step,
wherein, in the second step,
when the negative electrode layer of the first cell is in contact with the current collector, the second cell is laminated on the current collector so that the negative electrode layer of the second cell is in contact with the current collector, and
when the positive electrode layer of the first cell is in contact with the current collector, the second cell is laminated on the current collector so that the positive electrode layer of the second cell is in contact with the current collector.

3. The method according to claim 1,
wherein the current collector includes:
a conductor; and
an insulating member laminated on a peripheral edge portion of the conductor,
wherein in the laminating step, the cell is laminated on the conductor, and the insulating member is disposed around the cell.

4. The method according to claim 3,
wherein the insulating member is laminated on a one-side surface of the conductor, and
wherein the current collector further includes
an adhesive layer laminated on an other-side surface of the conductor in the peripheral edge portion of the conductor.

5. The method according to claim 3,
wherein the current collector includes a notch cut from an edge of the conductor inwardly through the insulating member, and
wherein in the laminating step, a jig is disposed in the notch to determine a position of the cell with respect to the current collector so that an edge of the cell is in contact with the jig.

6. A production apparatus for producing an all-solid-state battery, the production apparatus used in the method according to claim 5, the production apparatus comprising:
a support table capable of supporting the current collector;
a first movement member disposed at one side of the support table in a first direction, including a first jig, and capable of moving in the first direction between a first separated position away from the support table and a first proximate position closer to the support table than the first separated position;
a second movement member disposed at the other side of the support table in the first direction, including a second jig, and capable of moving in the first direction between a second separated position away from the support table and a second proximate position closer to the support table than the second separated position;
a third movement member disposed at one side of the support table in a second direction perpendicular to the first direction, including a third jig, and capable of moving in the second direction between a third separated position away from the support table and a third proximate position closer to the support table than the third separated position; and
a fourth movement member disposed at the other side of the support table in the second direction, including a fourth jig, and capable of moving in the second direction between a fourth separated position away from the support table and a fourth proximate position closer to the support table than the fourth separated position,
wherein the current collector includes a first notch, a second notch, a third notch, and a fourth notch,
wherein in a state in which the current collector is placed on the support table, the first notch is disposed in one end portion of the current collector in the first direction, the second notch is disposed in the other end portion of the current collector in the first direction, the third notch is disposed in one end portion of the current collector in the second direction, and the fourth notch is disposed in the other end portion of the current collector in the second direction,
wherein in a state in which the current collector is placed on the support table, and the first movement member is disposed at the first proximate position, the first jig is disposed in the first notch,
wherein in a state in which the current collector is placed on the support table, and the second movement member is disposed at the second proximate position, the second jig is disposed in the second notch,
wherein in a state in which the current collector is placed on the support table, and the third movement member is disposed at the third proximate position, the third jig is disposed in the third notch, and
wherein in a state in which the current collector is placed on the support table, and the fourth movement member is disposed at the fourth proximate position, the fourth jig is disposed in the fourth notch.

7. The production apparatus according to claim 6,
wherein in a state in which the current collector is placed on the support table, the cell is placed on the current collector, and the first movement member is disposed at the first proximate position, the second movement member is moved from the second separated position toward the second proximate position to allow the second jig to move the cell toward the first jig so that an edge of the cell is contact with the first jig to determine a position of the cell with respect to the current collector in the first direction, and
wherein in a state in which the current collector is placed on the support table, the cell is placed on the current collector, and the third movement member is disposed at the third proximate position, the fourth movement member is moved from the fourth separated position toward the fourth proximate position to allow the fourth jig to move the cell toward the third jig so that an edge of the cell is contact with the third jig to determine a position of the cell with respect to the current collector in the second direction.

8. The production apparatus according to claim 6, further comprising:
a position determining member fixed to the support table to determine a position of the current collector with respect to the support table.

9. The production apparatus according to claim 8,
wherein the position determining member includes:
a first position determining portion disposed in one end portion of the support table in the first direction; and
a second position determining portion disposed in one end portion of the support table in the second direction,
wherein the production apparatus further comprises:
a fifth movement member disposed at the other side of the support table in the first direction, and capable of moving in the first direction between a fifth separated position away from the support table and a fifth proximate position closer to the support table than the fifth separated position, the fifth movement member being moved from the fifth separated position toward the fifth proximate position to move the current collector placed on the support table toward the first position determining portion; and
a sixth movement member disposed at the other side of the support table in the second direction, and capable of moving in the first direction between a sixth separated position away from the support table and a sixth proximate position closer to the support table than the sixth separated position, the sixth movement member being moved from the sixth separated position toward the sixth proximate position to move the current collector placed on the support table toward the second position determining portion.

10. The production apparatus according to claim 6,
wherein each of the first jig, the second jig, the third jig, and the fourth jig is a rod extending in a lamination direction in which the cell and the current collector are laminated.

11. An all-solid-state battery comprising:
a plurality of cells each including a positive electrode layer, a negative electrode layer, and a solid electrolyte layer disposed between the positive electrode layer and the negative electrode layer; and
a plurality of current collectors,
wherein the cell and the current collector are alternately laminated so that the current collector is disposed between two of the cells, and
wherein the current collector includes
a conductor in contact with the cell, and
an insulating member laminated on a peripheral edge portion of the conductor.

12. The all-solid-state battery according to claim 11,
wherein the current collector includes a notch cut from an edge of the conductor inwardly through the insulating member.

13. An all-solid-state battery comprising:
a cell including a positive electrode layer, a negative electrode layer, and a solid electrolyte layer disposed between the positive electrode layer and the negative electrode layer; and
a current collector including a notch in a peripheral edge portion.

14. The all-solid-state battery according to claim 13,
wherein the current collector includes:
a conductor in contact with the cell; and
an insulating member laminated on a peripheral edge portion of the conductor, and disposed around the cell, and
wherein the notch is cut from an edge of the conductor inwardly through the insulating member.
